# EUROPEAN PATENT SPECIFICATION

(11) **EP 2 256 937 B1**
(45) Date of publication and mention of the grant of the patent: **28.12.2011**
(21) Application number: 09007172.1
(22) Date of filing: 28.05.2009
(51) Int. Cl.: H04B 1/00

(54) **Digital receiver, digital transmitter, method for operating a digital receiver or a digital transmitter and computer program**
Digitaler Empfänger, digitaler Sender, Verfahren zur Bedienung eines digitalen Empfängers oder eines digitalen Senders und Computerprogramm
Récepteur numérique, transmetteur numérique, procédé de fonctionnement d'un récepteur numérique ou d'un transmetteur numérique et programme informatique

(43) Date of publication of application: 01.12.2010
(73) Proprietor: Universität Duisburg-Essen, 45141 Essen (DE)
(72) Inventor: Viessmann, Alexander, 47137 Duisburg (DE); Waadt, Andreas, 47057 Duisburg (DE); Spiegel, Christoph, 46045 Oberhausen (DE); Kocks, Christian, 45481 Muehlheim an der Ruhr (DE); Burnic, Admir, 47269 Duisburg (DE)
(74) Representative: Burger, Markus

(56) References cited:
- EP-A- 1 750 376
- WO-A-00/69084
- WO-A-98/14023
- DE-A1-102007 022 970
- JP-A- 2001 189 675
- US-B1- 6 343 207
- US-B1- 6 654 428

## Description

### Background of the Invention

Embodiments according to the invention are related to a digital receiver, a digital transmitter, a method for operating a digital receiver, a method for operating a digital transmitter and a computer program.

Some embodiments according to the invention are related to an implementation concept for a digital video broadcast - T2 receiver (also designated as DVB-T2 receiver).

Some embodiments according to the invention are related to an evolution concept of terrestrial digital video broadcasting (DVB-T2/DVB-ngH).

In recent years, digital transmission of contents has significantly increased.

In parallel, extensive research has been performed in order to improve digital transmission systems. The complexity of digital communication protocols has increased. For example, the complexity of digital modulation, channel estimations, and of the channel coding has increased significantly.

Further, in view of ever increasing competition between different transmission formats, many transmission formats should be receivable with the single device. Even within a single device for a single transmission format, several quality steps are often available imposing high requirements on the supplied hardware.

In view of the above-described developments, and also in view of the permanent pressure to reduce costs and power consumption of the applied hardware, an efficient usage of the hardware resources is getting increasingly important. Further, as a product life-time is decreasing, concepts are desired which allow for a fast and efficient implementation of demonstrators and consumer devices adapted to handle the evolving communication standards.

In the following, some of the challenges will be described with reference to DVB-T (Digital Video Broadcasting, Terrestrial). DVB-T has established itself as the leading specification for digital terrestrial TV broadcasting. Since the time DBV-T was initially specified, there have been substantial developments in both the modulation technology available and the economics of the transmission chain. These recent results have paved the way towards a renovation of DVB-T, enabling new ways of modulating and error-protecting the broadcast stream and, as a consequence, an increased number of programs. Meanwhile, the standardization of the second generation DVB-T2 has been completed (see for example reference [1]) and first realizations of new broadcasting networks are expected to appear within the coming months.

With the decision to apply higher order modulation (HOM) up to 256-QAM (quadrature amplitude modulation), forward error correction coding based on low density parity check (LDPC) codes with code word lengths of up to 64k bits, and orthogonal frequency division multiplexing (OFDM) using a gross number of up to 32k points (see, e.g. reference [8]), DVB-T2 poses critical real-time requirements on the implementation of receivers. In addition, the receivers are required to be flexible to allow the defined variations of e.g. the modulation scheme, the channel coding, and the number of OFDM subcarriers (see e.g. reference [8]).

It is therefore recommendable to base the receiver designs on the software defined radio (SDR) paradigm (see e.g. reference [11]). However, state-of-the-art digital signal processors (DSP) are not powerful enough to provide a full DVB-T2 receiver implementation. Therefore, alternative approaches are desired for the hardware implementation of a DVB-T2 receiver.

WO 98/14023 describes a configurable digital wireless and wired communications system architecture. A configurable multiprocessor communications architecture performs digital communications functions and is configurable for different digital communications standards, such as various digital cellular standards. The multiprocessor architecture includes two or more digital signal processing cores, a microcontroller or micro-scheduler, a voice coder/decoder (CODEC) and a relatively low performance central processing unit. Each of the above devices are coupled to a system memory. The general purpose CPU preferably performs user interface functions and overall communications management functions. A CPU local memory and various peripheral devices are coupled through a CPU local bus to the CPU, and these devices are accessible to the CPU without the CPU having to access the main system bus. A dual port bus arbiter is coupled between the CPU and the system bus and controls access to the system bus and the CPU local bus. The micro-scheduler operates to schedule operations and/or functions, as well as dynamically controls the clock rates, of each of the DSPs and the hardware acceleration logic to achieve the desired throughput while minimizing power consumption.

JP 2001189675 describes a radio equipment adaptive to plural radio communication systems with minimum hardware devices. The radio equipment is composed of an A/D and D/A converter, memory for temporarily storing the data of the A/D and D/A converter, a digital signal processor for processing the prescribed operation of the radio equipment on the basis of a program described by software, an FPGA for processing the prescribed operation of the radio equipment in the manner of hardware on the basis of a program described in a hardware description language, a reloadable storage device for holding the software of these digital signal processor and FPGA, an input/output controller, an input/output interface, a CPU for executing software of controlling its own entire equipment, a ROM for storing the software of the CPU and a memory for temporarily storing data processed by the CPU. These elements are connected by the FPGA.

EP 1 750 376 A1 describes a radio communication device. A plurality of systems of reconfigurable radio processing units whose function and performance can be modified are described. A control unit collects quality information on the communication link in communication methods received at respective radio processing systems. According to this, the control unit selects an optimal communication method and transmission mode from a plurality of communication methods and transmission modes like, for example, diversity transmission between a plurality of systems, diversity transmission by a single communication method, and MIMO channel multiplex transmission. By modifying configurations of the reconfigurable radio processing unit according to the selected communication method and transmission mode, it is possible to communicate at a desired transmission mode.

Generally speaking, it is therefore desirable to create a concept for implementing and/or operating a digital communication device (e.g. a digital receiver, a digital transmitter, or a digital transceiver comprising a digital receiver and a digital transmitter), which allows for an efficient usage of the available resources.

### Summary of the Invention

An embodiment according to the invention creates a digital receiver comprising a receiver front end configured to provide digitized receiver data. The receiver also comprises an instruction-based digital signal processor configured to execute the program, a hardware accelerator comprising a field-programmable gate array, and a data sink interface. The digital signal processor is configured to coordinate, using a multi-tasking scheduling program, an acquisition of data from the receiver front end to the digital signal processor, a processing of the acquired data by the digital signal processor and an exchange of data between the digital signal processor and the hardware accelerator.

This embodiment according to the invention is based on the finding that the available resources can be used efficiently if the digital signal processor coordinates the operation of the different components of the digital receiver. While the FPGA, which implements a fixed hardware structure (e.g. fixed during runtime) using, for example, a plurality of interrelated configurable logic blocks, is well-suited for accelerating processes having a predetermined timing complexity, the program-based digital signal processor provides superior flexibility for scheduling tasks which typically require the making of decisions and also require the handling of synchronous events.

Further, by executing the coordination of the different components of the digital receiver using the program-based signal processor, rather than in a hardware-structure-based FPGA circuit, resources are used efficiently and well-adapted to the present requirement. For example, if a scheduler were to be implemented in an FPGA, the scheduler would require a specific amount of resources, irrespective of whether the scheduler is actually required for only a small percentage of the time. Thus, the resources which would be spent on the implementation of a scheduler in an FPGA, would be lost for other purposes, even though the scheduling would most probably remain in a wait state for most of the time.

In contrast, by implementing a coordination and scheduling in the instruction-based digital signal processor, the scheduling can be performed in a time-sharing manner with other processing tasks. If the scheduling requires a high amount of resources, these resources will not be available for other processing tasks. However, if the scheduling and coordination requires only a little effort, which is typical for scheduling and coordination tasks, the instruction-based signal processor can perform a large amount of processing tasks using the same hardware which is also applied for the scheduling, in a time-sharing manner. Accordingly, resources can be used efficiently.

To summarize the above, it has been found that an efficient resource usage can be obtained if the workload of the digital receiver is distributed appropriately between an instruction-based digital signal processor and a hardware accelerator, wherein the scheduling, which coordinates multiple tasks, can be performed by a multi-tasking scheduling program.

Another embodiment according to the invention creates a digital transmitter comprising a transmitter front end configured to receive digitized transmit data and to generate a transmit signal on the basis of the digitized transmit data. The digital transmitter also comprises an instruction-based digital signal processor configured to execute a program, a hardware accelerator comprising a field-programmable gate array, and a data source interface. The digital signal processor is configured to coordinate, using a multi-tasking scheduling program, a processing of transmit data by the digital signal processor, an exchange of data between the digital signal processor and the hardware accelerator, and a provision of the transmit data from the digital signal processor to the transmitter front end.

Another embodiment creates a method for operating a digital receiver.

Yet another embodiment according to the invention creates a method for operating a digital transmitter.

Another embodiment according to the invention comprises a computer program for executing said methods.

Embodiments according to the invention provide an alternative approach for the implementation of a communication device, e.g. a DVB-T2 receiver, which comprise the implementation of well-assorted high-speed connections between the different receiver components.

Embodiments according to the invention create a SDR-based DVB-T2 receiver concept, which has been implemented and successfully tested using available hardware.

### Brief Description of the Figures

Embodiments according to the invention will subsequently be described taking reference to the enclosed figures, in which:
- Fig. 1a: shows a block schematic diagram of a digital receiver according to an embodiment of the invention;
- Fig. 1b: shows a block schematic diagram of a digital transmitter according to an embodiment of the invention;
- Fig. 2: shows a block schematic diagram of a DVB-T2 demonstration concept;
- Fig. 3: shows a more detailed block schematic diagram of the demonstration concept of Fig. 2;
- Fig. 4a: shows a schematic representation of a digital signal processor board, according to an embodiment of the present invention;
- Fig. 4b: shows a schematic representation of an interface board, according to an embodiment of the invention;
- Fig. 5: shows a block schematic diagram of a down converter chip which can be used in some embodiments of the invention;
- Fig. 6a: shows a flowchart of a method for coordinating the components in the signal processing of a digital receiver or digital transmitter;
- Fig. 6b: shows a flowchart of a method for coordinating different parallel tasks;
- Fig. 6c: shows a flowchart of a method for coordinating different processing tasks in the DVB-T2; and
- Fig. 7: shows a block schematic diagram of another hardware accelerator according to an embodiment of the invention.

### Detailed description of the Embodiments

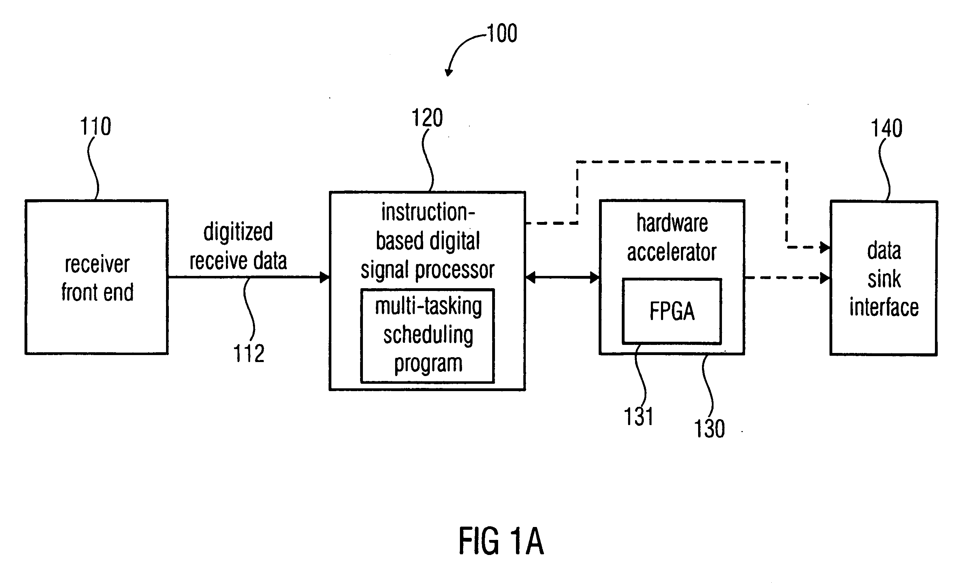

### Embodiment according to Fig. 1a

Fig. 1a shows a block diagram of a digital receiver according to an embodiment of the invention. The digital receiver 100 comprises a receiver front end 110, which is configured to provide digitized receive data 112. The digital receiver 100 also comprises an instruction-based digital signal processor 120, which is configured to receive the digitized data from the receiver front end 110. The receiver 100 further comprises a hardware accelerator 130 which hardware accelerator 130 comprises (or consists of) a field-programmable gate array (FPGA) 131. The instruction-based digital signal processor and the hardware accelerator 130 are coupled to exchange data for example in one direction, or even in both directions.

The digital receiver 100 further comprises a data sink interface 140 which is coupled with the hardware accelerator 130 and/or the instruction-based digital signal processor to forward processed data, which are based on the digitized receive data 112, to a data sink which is typically arranged externally.

In the following, the functionality of the digital receiver 100 will be briefly discussed. The instruction-based digital signal processor is configured to execute a program. In particular, the digital signal processor is configured to coordinate, using a multi-tasking scheduling program, an acquisition of data from the receiver front end 110 to the digital signal processor 120, a processing of the acquired data by the digital signal processor, and an exchange of data between the digital signal processor and the hardware accelerator 130. Thus, the instruction-based digital signal processor 110 takes over the coordination and scheduling function within the digital receiver 110. Accordingly, the digital signal processor coordinates the cooperation of the components of the digital receiver 100, wherein the receiver front end 110 may operate asynchronously when compared to the digital signal processor 120, and also when compared to the hardware accelerator 130. By implementing a temporal coordinator and scheduler within the digital signal processor, the different components of the digital receiver 110 can be operated with different clocks. For example, the receiver front end 110 typically provides digitized received data at a rate which is synchronized with a sample rate of the received signal input into the receiver front end 110. In other words, the instruction-based data signal processor typically relates to an independent clock frequency which, in some cases, may be asynchronous when compared to a clock of the receive front end. The FPGA 131 of the hardware accelerator 130 is typically operated at yet another different clock frequency driving synchronous FPGA processing structures. In many cases the allowable clock frequency of the FPGA 131 may be different from (e.g. smaller than) the allowable clock frequency of the instruction-based digital signal processor 120. Thus, in order to avoid complicated clock frequency synchronization, it is often recommendable to operate the different components (receiver front end 110, instruction-based digital signal 120, and hardware accelerator 130) of the digital receiver 100 with mutually asynchronous clocks. Nevertheless, the required coordination of the different components of the digital receiver 120 is achieved by the multi-tasking scheduling program run in the digital signal processor 120. As already outlined in detail above, it has been found that due to the implementation of the scheduling and coordination using a multi-tasking scheduling program, executed in the digital signal processor, resources can be used more efficiently than in a hardware implementation of a scheduler or a hardware implementation of other synchronization mechanisms. In particular, it has been found that the usage of a multi-tasking scheduling program allows for a selectable allocation of time-resources (digital signal processor processing time) to the different tasks, while this is not possible in any hardware scheduling mechanisms.

Accordingly, the digital receiver 100 can be implemented with very good resource efficiency.

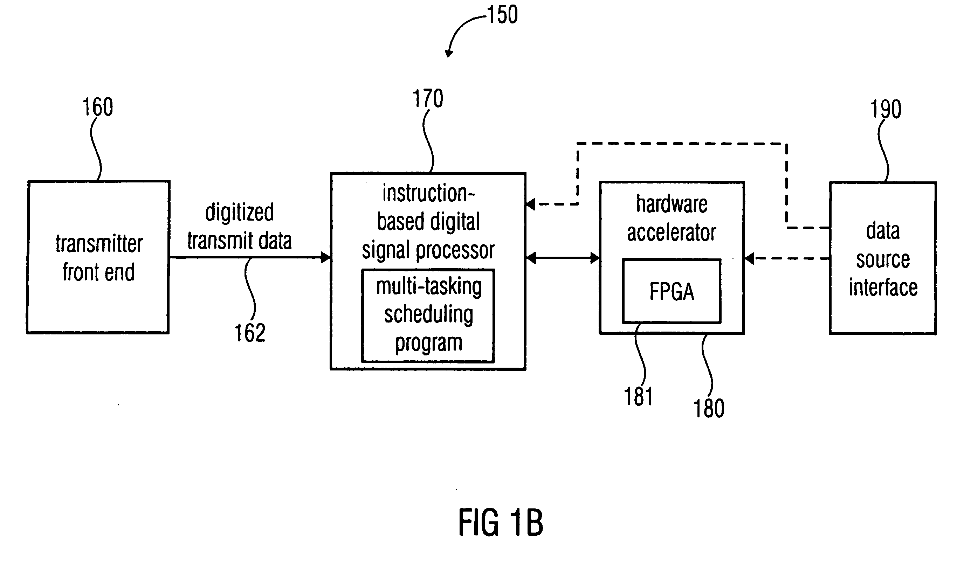

### Embodiment according to Fig. 1b

Fig. 1b shows a block schematic diagram of a digital transmitter, according to an embodiment of the invention. The digital transmitter 150 comprises a transmitter front end 160, which is configured to receive digitized transmit data and to generate a transient signal on the basis of the digitized transmit data 162. The receiver 150 also comprises an instruction-based digital signal processor 170 which is configured to execute a program and to provide the digitized transmit data 162. The transmitter 150 also comprises a hardware accelerator 180 which comprises (or consists of) an FPGA 181. The hardware accelerator 180 is coupled with the digital signal processor 170 to allow for a unidirectional or bidirectional exchange of data. The digital receiver 150 also comprises a data source interface 190 which is coupled with the digital signal processor 170 and/or the hardware accelerator 180 to provide input data, which is provided from a (typically external) data source to the digital signal processor 170 and/or the hardware accelerator 180.

Similar to the digital receiver 100, the instruction-based digital signal processor 170 of the digital transmitter 150 is configured to coordinate, using a multi-tasking scheduling program, a processing of transmit data by the digital signal processor, an exchange of data between the digital signal processor and the hardware accelerator 180, and the provision of the digitized transmit data 162 from the digital signal processor to the transmitter front end 160.

Similar as in the digital processor 150, the components (transmitter front end 160, digital signal processor 170, and hardware accelerator 180) of the digital transmitter 150 may be operated with asynchronous clocks, while the coordination and scheduling is performed by the digital signal processor 170.

The digital transmitter 150 comprises similar advantages as the digital transmitter 100, such that a detailed discussion will be omitted here.

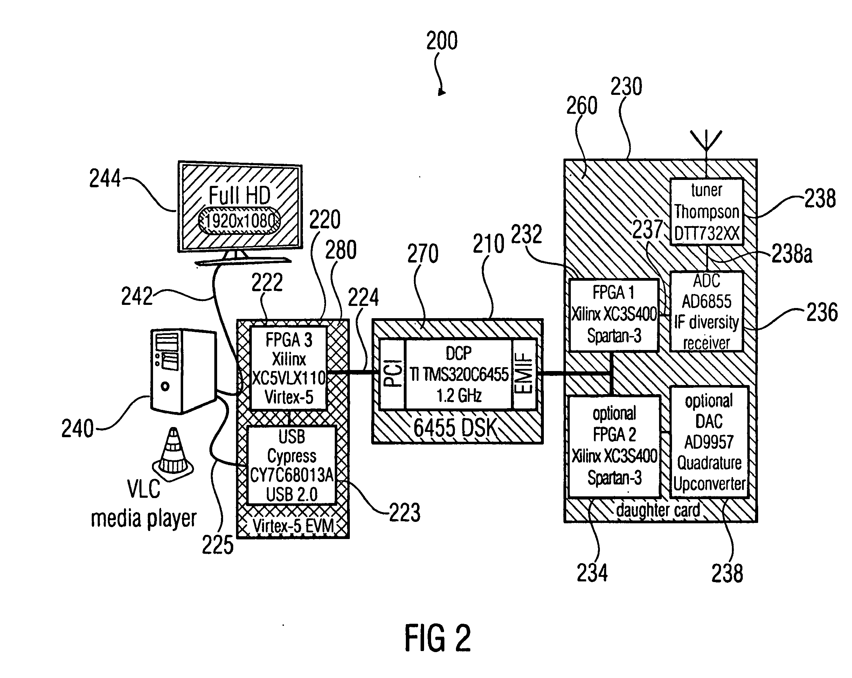

### Embodiment according to Fig. 2

### Overview

Fig. 2 shows a block schematic diagram of a DVB-T2 demonstration concept, according to an embodiment of the invention. The system shown in Fig. 2 which serves as a demonstration platform is designated in its entirety with 200. The demonstration platform is able to receive and demodulate DVB-T2 broadcast signals. The demonstration platform comprises (or consists of) two different platforms: one of the platforms is a digital-signal-processor platform 210 (DSP platform) hosting, for example, a Texas Instruments TI TMS320C6455 digital signal processor (DSP) operating at 1.2 GHz, and the other platform is an FPGA platform 220, for example, a XILINX VIRTEX-5(XC5VLX110) FPGA (field programmable gate array) platform serving as a hardware accelerator to the digital signal processor. Both platforms 210, 220 are interconnected by an appropriate interface 224. A 32 bits wide PCI (Peripheral component Interconnect) bus operating at 33 MHz (yielding for example, a maximum theoretical burst throughput of roughly 1 Gbit/s) was chosen for this purpose. Moreover, the DSP platform is equipped with a daughter card (DC) 230 hosting, for example, two XILINC SPARTAN3 (XC3S400) FPGAs 232, 234, which are, for example, connected to the analog-to-digital converter (ADC) and the digital-to-analog converter (DAC) digital interfaces 236, 238, respectively. These FPGAs 232, 234 are mainly used for control and peripheral interconnection. Fig. 2 depicts the demonstrator concept consisting of components mentioned before.

In the following, the implementation concept will be explained in more detail. Firstly, some important aspects of the implementation concept will be introduced.

DVB-T2 (Just like many other digital transmission concepts) poses critical real-time requirements on the implementation of receivers (and also of transmitters). In contrast to many other wireless applications, a single state-of-the art digital signal processor (DSP) can no longer handle the reception alone.

In the following section, an inventive concept for the implementation of DVB-T2 receivers will be presented. The presented concept uses:
- Analog IF (intermediate frequency) tuners (e.g. the tuner 238), intermediate frequency sampling and digital down conversion (e.g. using the intermediate frequency diversity receiver 236 comprising an analog-to-digital converter);
- USB2.0, Fast Ethernet or Gigabit Ethernet connections between the receiver hardware (comprising components 210, 220, 230) and the source decoding hardware, e.g. a PC 240 or a TV set; and
- PCI 224 to connect all (or at least some) digital processing cores 210 and hardware accelerators 220.

Furthermore, according to another aspect, the concept uses a combination of
- coarse logic which can, e.g. be implemented using one or more field programmable gate arrays 232, 234 (FPGA) in a demonstrator (or in a customer device), and
- a processor, e.g. a digital signal processor 210,
   to handle the scheduling of the receiver 200.
   According to an aspect of the invention, the coarse logic 232, 234 realizes the physical connections between
- the digital front end, i.e. the output of the digital down conversion unit 236,
- the digital signal processor 210, and
- the one or more digital hardware accelerators 220, which are used to implement the real-time critical, complex signal processing algorithms such as the channel decoder.

This combination of interfaces and control logic, as well as the splitting of the scheduler into a hardware part running on the coarse logic, and the software part running on the processor, constitutes an important aspect of the present invention. Splitting the scheduler into a hardware and a software part may for example be performed such that the hardware part takes over supplementary functionalities such as providing a buffer or switchable data paths. However, the hardware part of the scheduler is typically controlled by the multi-tasking scheduling program which runs on the digital signal processor.

### Details

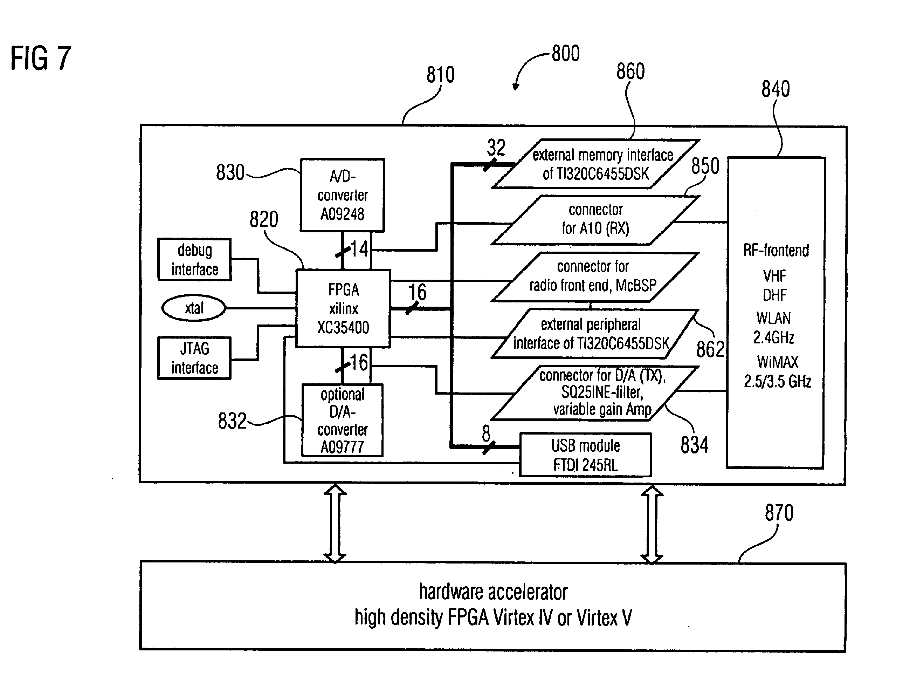

In the following, details will be described with reference to Fig. 2, and also taking reference to Fig. 7 which shows another embodiment of the implementation concept.

As can be seen from Fig. 2, the radio frequency front end (RF front end) which comprises the tuner 238 connects to the analog-to-digital converter 236, which is capable of intermediate-frequency processing and digital down-conversion. Furthermore, a connection to a digital-to-analog converter (DAC) 238 can be realized optionally to evolve a pure receiver into a transceiver. The coarse logic is located in one or more FPGAs 232, 234 in the shown concept. The interface 224 to the high-density FPGA 222, the aforementioned hardware accelerator, is realized for example by PCI. Furthermore, the FPGA 222 interfaces via USB or Fast Ethernet to a data sink and/or data source (e.g. the personal computer 240). For this purpose a USB controller or Ethernet controller 223 may be coupled between the FPGA 222 and the data sink and/or data source 240.

According to an aspect of the invention, the first component in the receiver chain is a UHF (ultra high frequency) and VHF (very high frequency) band capable DVB-T tuner 238. The tuner 238 features a differential intermediate frequency (IF) output 238a centered at 36 MHz resulting in the DVB-T2 signal being located at 32 MHz up to 40 MHz. This enables two possible methods for down conversion to the complex baseband. For both methods, an IF diversity receiver 236 (e.g. of the type AD6655 by Analog Devices) can be used. The IF diversity receiver features a sampling rate of up to 105 MS/s at an analog input bandwidth of up to 650 MHz and direct digital down conversion to the complex baseband. As can be seen from Fig. 2, the IF diversity receiver 236 may for example receive the differential IF output 238a provided by the tuner 238.

A first possible method for down conversion is Nyquist sampling at a frequency (sampling rate) larger than 80 MHz. The useful signal may in this case be located at the rightmost corner of the Nyquist Zone. Because of Fast Fourier Transform (FFT) implementation issues, the signal should preferably be sampled at a multiple of the double baseband sampling rate, which is defined to be equal to 64/7 MHz ≈ 9.1428 MHz (the elementary period is defined as 7/64 µs, cf. e.g. reference [8]). The smallest sampling rate fulfilling this constraint would be 91.428 MHz. In the FPGA 1 (at reference numeral 232) of the receiver 200 of Fig. 2, decimation by five may be implemented to reduce the amount of data offered to the digital signal processor 210.

A second possible method of down conversion is sub-sampling at a sampling frequency of 16 MHz. The useful signal is in this case located in the center of the fifth Nyquist Zone and does not need to be further decimated after digital down conversion. Instead, since the signal is now sampled at a baseband sampling rate of only 8 MHz, it may need to be fractionally resampled by a factor of 8/7 in order to meet the elementary period of 7/64 µs.

It should be understood that in the embodiment described here, the available tuner is a DVB-T tuner because of the fact that DVB-T2 tuners are not yet available. Depending on the analog performance of the device, in particular the phase noise incorporated in the signal path, the quality of the receive signal may be reduced considerably. As a worst-case scenario, the demodulation of higher order quadrature amplitude modulation (QAM) such as the desired 256-QAM, could even fail completely. However, by providing the tuner with sufficiently good signal path characteristics (e.g. low phase noise), it is possible to obtain a sufficiently good reception.

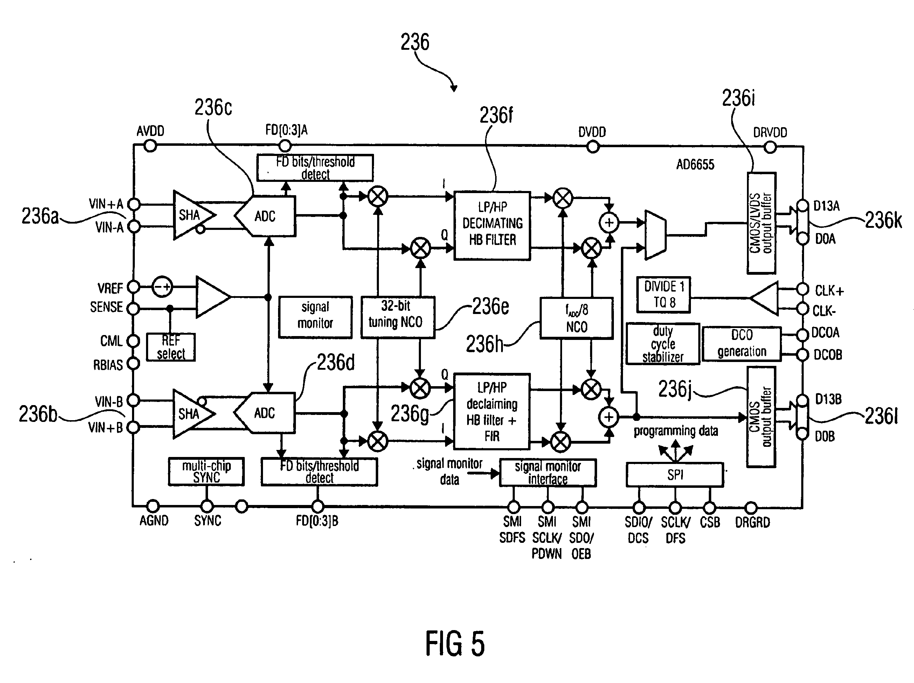

As mentioned above, the components of the digital receiver 210 may be distributed across multiple boards. An area 260 in Fig. 2 shows the building blocks of a so-called "Spartan-3 daughter card" with its various interfaces and the RF front end (tuner 238). The "Spartan-3 daughter card" also comprises further building blocks (first FPGA 232, IF diversity receiver 236, optional second FPGA 234 and optional digital-to-analog converter 238). The daughter card is also sometimes designated as a "Falcon-3" board. Because all the currently available DVB-T tuners offer the down converted signal at an IF frequency of 36 MHz, it is not possible to reuse a platform which only offers baseband input sampling up to 10 MS/s. Because of the IF constraint, the daughter card described herein (also designated as "Falcon-3 platform") is equipped with a digital down conversion unit (e.g. of type Analog Devices AD6655) facilitating numerically controlled oscillator (NCO) based mixing and digital finite impulse response(FIR) filtering down to the complex base band, all in the digital domain. A detailed block diagram of the digital down conversion unit 236 is shown in Figure 5. A first stage consists of two independent analog input channels 236a, 236b, followed by their dedicated analog-to-digital converters 236c, 236d. Afterwards, the digitized signal is down converted by a 32 bits wide numerically controlled oscillator (NCO) 236e. The tuning frequency ranges from zero up to the digital system clock, thus the tuning frequency resolution is 1/2³² ≈ 2.3×10⁻¹⁰ times the digital system clock. In case of Nyquist sampling at 91.425 MHz and direct down conversion, the tuning frequency step size will be 21.3 mHz. Following the numerically controlled oscillators (NCOs) in the next stage low pass filters 236f, 236g with fixed coefficients are applied to both signal paths independently. The filters are implemented as decimating half band filters, and therefore, reduce the sampling by a factor of two compared to the intermediate frequency sampling frequency. The next stage is an optional numerically controlled oscillator (NCO) 236h that again upconverts the base band signal to low intermediate frequency, which can be useful for some implementations of the further digital processing. Finally, the inphase/quadrature (I/Q) baseband signal can be taken from the integrated output buffers 236i, 236j in an interleaved format. Accordingly, a digitized and downconverted receive data information is available at outputs 236k, 2361 of the IF diversity receiver 236. For example, inphase information may be available at the output 236k and quadrature information may be available at the output 2361.

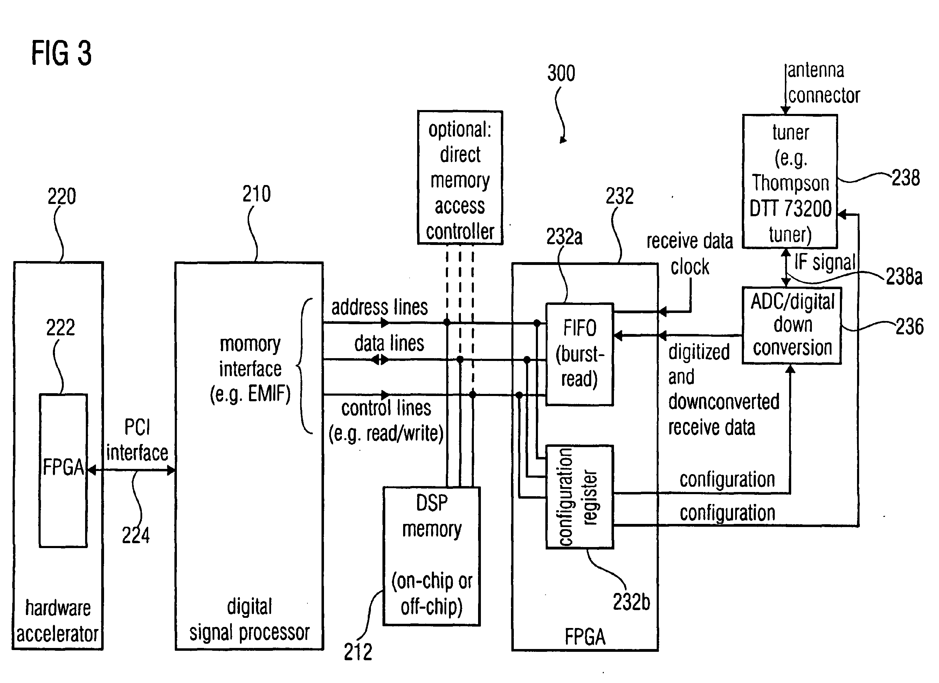

To summarize the above, inputs 236a, 236b of the IF diversity receiver 236 may be coupled to intermediate frequency outputs of the tuner 238, and outputs 236k, 2361 of the down conversion unit 236, providing digitized and downconverted receive data, are coupled to the FPGA 232. The FPGA 1 (reference number 232) shown in Fig. 2 may for example register the output of the digital down converter 236 into an internal FIFO memory with its output register connected to the digital signal processor's external memory interface (EMIF) which allows the sampled data to be transferred to the digital signal processor's internal memory for further processing. Details regarding this functionality will be explained later on with reference to Fig. 3. The memory transfer is usually carried out by a direct memory access (DMA) controller allowing high throughput and low digital signal processor load at the same time.

According to an aspect of the invention, the digital signal processor (area 270 of Fig. 2) will mainly run all decision-based algorithms such as time and frequency synchronization and processing of the signaling information. Additionally, the OFDM demodulation incorporating the Fast Fourier Transform (FFT) processing, as well as the quadrature amplitude modulation (QAM) demodulation with joint log likelihood ratio (LLR) generation is preferably implemented in the digital signal processor. The resulting log likelihood ratios are 4-bits quantized and transferred to the Virtex-5 hardware accelerator platform 220 through the PCI interface 224.

The Virtex-5 FPGA platform 220 (area 280 of Fig. 2) is used for low level, high data rate processing, such as the deinterleaving and, most important, the LDPC and BCH channel decoding. On the Virtex-5 platform 220, there is a USB 2.0 controller (e.g. of type Cypress CY7C68013A) which is used for transferring the raw decoded bits containing the transport stream to a high-performance personal computer 240 running a HD (High Definition) capable media player. The de-multiplexing of the different MPEG (moving picture experts group) streams out of the transport stream can either be done before transferring the data from the Virtex-5 FPGA 222 to the PC 240 or afterwards within the media player's user interface.

### Demonstrator Platform

According to an aspect of the invention, the software defined radio (SDR) based DVB-T2 receiver described herein comprises, for example:
- a radio frequency (RF) front end 238, allowing to process signals in various frequency bands,
- a mixed signal board daughter card (also designated herein as "Falcon-3") allowing to analog-to-digital convert the down-converted analog receive signals and to distribute the digital signals to the various digital processing entities through an FPGA, e.g. through a XILINX Spartan-3 FPGA (field programmable gate array),

- the TMS320C6455 DSP board 210 with a powerful Texas Instruments TMS320C6455 digital signal processor (DSP), and
- the XILINX/Avnet FPGA board with an XILINX VIRTEX-LX110 FPGA.

The TMS320C6455 DSP and the XILINX VIRTEX5-LX110 FPGA provide the digital signal processing capabilities required by the DVB-T2 standard.

In the demonstrator platform, a DVB-T tuner board hosts the DVB-T tuner, e.g. of type Thomson DTT73200.

The daughter card (also designated as "Falcon-3") which is comprised by the demonstrator platform, may be fabricated in a 4-layer printed circuit board design. The daughter card consists of two main parts. A base part contains, e.g. two XILINX SPARTAN-3 (XC3 S400) FPGAs, as well as analog-to-digital converter/digital-to-analog converter (ADC/DAC) digital interfaces and connectors.

The digital signal processor, which is comprised by the digital signal processor board of the demonstrator platform, is the heart of the DVB-T2 receiver, controlling and reconfiguring all further hardware components.

The VIRTEX5-LX110 FPGA, which is comprised by the FPGE board of the demonstrator platform, acts as a necessary and flexibly adjustable hardware accelerator, providing real-time error control decoding capabilities.

The digital signal processor is programmed in C++ language using, for example, the so-called "Code Composer Studio", and all FPGAs are programmed, e.g. in Verilog HDL (hardware description language) using, e.g. the so-called "XILINX ISE" development suite.

To facilitate a high speed interconnection between the digital signal processor 210 and the VIRTEX5-LX110 FPGA, a point-to-point variant, i.e. a simplified version, of the well-known PCI (peripheral component interconnect) bus is used. The error control decoded bitstream is the output of the software-defined-radio (SDR) based DVB-T2 receiver described herein. To facilitate a low-cost and at the same time standardized interface, the DVB-T2 receiver relies on a USB2.0 connection.

The radio frequency (RF) received signals, prevailing in the VHF or in the UHF bands, is first processed by the Thomson DTT73200 digital terrestrial tuner 238, generating an intermediate frequency (IF) received signal 238a at its output. To alleviate the impact of inter-modulation distortions (IMD) caused by in-phase/quadrature (I/Q) imbalancing, a single heterodyne analog receiver is deployed which feeds an analog-to-digital converter (ADC) 236, for example of type Analog Devices AD6655. In the analog-to-digital converter (e.g. of the type AD6655), the intermediate frequency received signal 232a is sampled and digitally downconverted. The digitized (and downconverted) received signal 237 output by the analog-to-digital converter (e.g. AD6655) is transferred via the FPGA 323 (e.g. of type XILINX SPARTAN3) to the digital signal processor 210 (e.g. of type TMS320C6455) for synchronization and demodulation. The demodulated signal is then transferred to the hardware accelerator FPGA 222 (e.g. of the type XILINX VIRTEX5-LX110) for LDPC decoding. Finally, the error control decoded bitstream 225 is transferred to a personal computer, for example a quad-core host personal computer, via a USB2.0 carrying out the source decoding and the video displaying via an HDMI (high definition multimedia interface) connection 242 to a full HD display 244.

### Details regarding the interaction between the digital signal processor and the receiver front end

In the following, it will be described how the digital signal processor controls the acquisition of data from the receiver front end to the digital signal processor. For this purpose Fig 3 shows a block schematic diagram of a digital receiver, according to an embodiment of the invention. The digital receiver 300 of Fig 3 is similar to the digital receiver 200 of Fig 2, such that identical means will be designated with identical reference numerals and will not be explained again.

Generally speaking, the digital signal processor 210 is coupled with the FPGA 232 via its external memory interface (EMIF). For this purpose, the FPGA 232 comprises (or implements) a first-in-first-out memory 232a and a configuration register 232b. A data input of the FIFO memory 232a is coupled with an output of the analog-to-digital converter 236, such that the FIFO receives, as input data, digitized and downconverted received data. A receive data clock of the FIFO 232a is generated to be in synchronism with an output data update rate of the analog-to-digital converter 236. Thus, digitized and downconverted receive data provided by the analog-to-digital converter 236 are clocked into the FIFO memory 232a. However, the FIFO memory 232 is configured such that an output of data is controlled by the external memory interface of the digital signal processor 210. For this purpose, the FIFO memory 232 may be coupled to address lines and/or control lines of the external memory interface of the digital signal processor 210. A data output of the FIFO memory 232a may also be coupled to the data lines of the external memory interface of the digital signal processor 210.

In order to achieve an efficient handling of the digitized and downconverted received data, the digital signal processor may be programmed to perform a block read of data stored in the FIFO memory 232a whenever a certain amount of data has been input into the FPGA from the analog-to-digital converter 236.

For example, the digital signal processor may be programmed to read a full block of digitized and downconverted received data (comprising a plurality of ADC samples) from the FIFO memory 232a in a first read operation in response to the detection that such full block of received data has been input into the FIFO memory 232a. Thus, while data may be input into the FIFO memory 232 in a temporally regular manner (e.g. one data word per ADC sample time interval), the readout of the FIFO memory may be performed block-wise in a burst mode of operation. Thus, a burst readout of data from the FIFO memory 232 via the external memory interface of the digital signal processor 210 may occur less frequently than the input of digitized and downconverted received data into the FIFO. In this manner, a load of the external memory interface of the digital signal processor 210, caused by the reading of the digitized and downconverted received data, is concentrated to short bursts of multiple receive operations, spaced by longer periods of inactivity. Accordingly, an efficiency of the data transfer process is maximized and synchronization overhead is kept small.

In some embodiments, the digital signal processor 210 may be configured to transfer data read from the FIFO memory 232a into one of its processor registers. However, alternatively, the digital signal processor 210 may be configured to transfer data read from the FIFO memory 232a into an on-chip or off-chip memory associated with the digital signal processor (also designated as "DSP memory").

In an alternative embodiment, a direct memory access controller may be present to transfer data read from the FIFO memory 232a via the external memory interface of the digital signal processor 210 to an on-chip or off-chip memory associated with the digital signal processor.

In addition, a configuration register 232b implemented in the FPGA 232 may be coupled to the external memory interface of the digital signal processor 210, such that a content of the configuration register 232b can be set by a memory write operation of the digital signal processor. For this purpose, an access to the configuration register 232b may be enabled in dependence on the address lines of the external memory interface. One or more control lines of the external memory interface (e.g. a "memory write line") may also control the writing into the configuration register 232b. The content of the configuration register 232b may, for example, be used to set up the operation of the analog-to-digital converter 236 and/or of the tuner 238.

### Digital Signal Processor Board

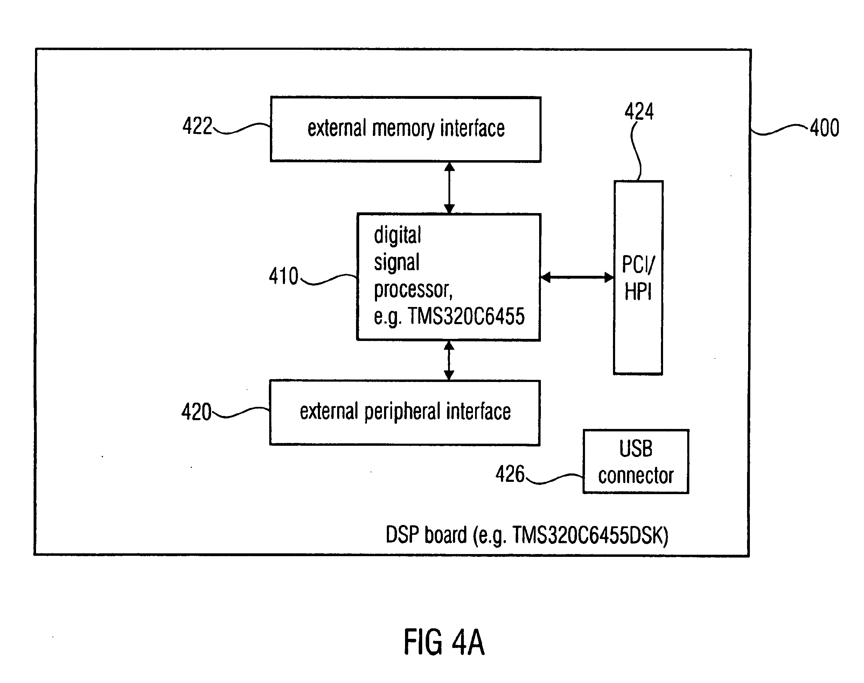

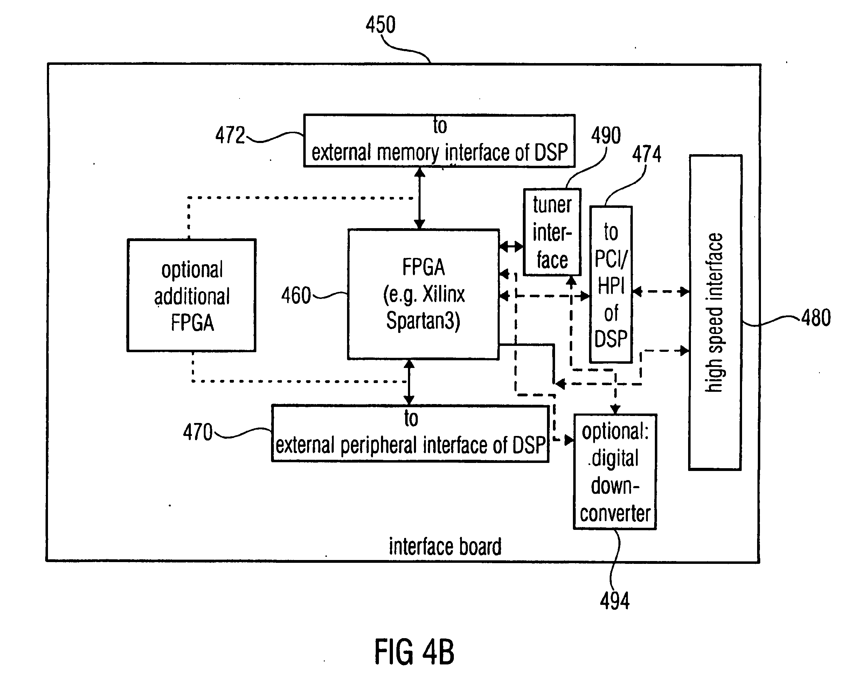

In the following, some aspects of the digital signal processor board, the digital signal processor 120, 210, will be briefly described with reference to Fig. 4a. Fig. 4a shows a schematic representation of the digital signal processor board. The digital signal processor board 400 comprises, as a key component, the digital signal processor 410. The digital signal processor board also comprises, for example, an external peripheral interface 420, which may be accessible at a connector of the digital signal processor board. The digital signal processor board 400 further comprises an external memory interface 422, which may be accessible at another connector. In addition, the digital signal processor board may comprise a peripheral component interconnect (PCI) interface and/or a host-port interface (HPI) 424 which may be available at a further connector.

For example, the digital signal processor 410, which may be a Texas Instrument TMS320C6455 digital signal processor, may comprise on-chip the external memory interface, the peripheral component interconnect interface and/or the host port interface, and/or additional interfacing capabilities making up the external peripheral interface.

Additionally, the digital signal processor may, for example, comprise on-chip a direct memory access controller.

Further, the digital signal processor board 400 may comprise a USB interface, which may be available via a USB connector 426. The USB connector, may for example be usable for programming and debugging, but also for any other data transfer.

In a preferred embodiment, the digital signal processor may be configured to be operated at a clock rate of 1.2 GHz.

In a preferred embodiment, a digital signal processor board is used which is sold by the company "Spectrum Digital Incorporated" under product name TMS 320C6455 DSP.

### Interface Board

In addition to the digital signal processor board, an interface board may be used in a demonstrator setup, wherein the interface board is a mixed signal board daughter card, sometimes designated as "FALCON3". The interface board 450 comprises, as a key component, a field programmable gate array 460. The interface board 450 may, for example, comprise a connector 470 configured to connect the FPGA 460 with the external peripheral interface 420. The interface board 450 further comprises a connector 472 configured to connect the FPGA 460 with the external memory interface 422, and a connector 474 configured to connect to the PCI/HPI interface 424 of the digital signal processor 410. The interface board 450 may comprise an additional high-speed interface 480, which may be coupled with the FPGA 460 and/or the connector 474. Further, the FPGA 460 may optionally be coupled with the connector 474.

The high-speed interface 480 may, for example, be configured to connect the interface board with the hardware accelerator, for example, in the form of a XILINX/Avnet VERTEX5 board.

Furthermore, the interface board 450 comprises a tuner interface 490 which allows the connection of a tuner board, for example comprising a THOMSON ATSC tuner, with the interface board 450.

In addition, the interface board 450 optionally comprises a digital down converter 494, for example of the type Analog Devices AD6655, comprising an analog-to-digital converter. The digital down converter 494 is preferably circuited between the tuner interface 490 and the FPGA 460.

To summarize the above, some embodiments according to the invention allow for a particularly flexible implementation of a digital receiver or digital transmitter, or digital transceiver. The receiver front end, the digital signal processor, and the hardware accelerator can be connected using different types of interfaces. For example, standardized interfaces such as the PCI interface or the HPI interface can be used. Alternatively, however, proprietary interfaces can be used.

Nevertheless, by interfacing the receiver front end and the hardware accelerator with the digital signal processor, scheduling and coordination can be performed by the digital signal processor in a very efficient way.

### Physical Demonstrator Hardware Setup

A physical implementation of the digital receiver demonstrator comprises for example a compound of a three stacked printed circuit boards (PCB). On the top, a radio frequency tuner board may be arranged. The radio frequency tuner board hosts, for example, the abovementioned Thompson DTT73200 digital terrestrial tuner. The radio frequency tuner board is connected to the mixed signal board which may be arranged in the middle of the stack. This mixed signal board hosts, for example, one or two XILINX SPARTAN3 FPGAs, of which one is required for the DVB-T2 receiver. The mixed signal board is connected to the Texas Instruments / Spectrum Digital DSP board which contains, for example, the TMS320C6455 DSP operated at a clock frequency of 1.2 GHz. In addition, the demonstrator setup comprises the XILINX/Avnet VIRTEX 5-LX110 FPGA board, which may for example be arranged beside the matching stack. This board is electrically connected to the mixed signal board via a PCI cable (using a PCI based high speed connection between the digital signal processor and the FPGA of the hardware accelerator, which may be routed via the mixed signal board). The XILINX/Avnet VIRTEX5-LX110 FPGA board is connected to a host PC via a USB interface, wherein the host PC may be a quad-core PC.

### Scheduling

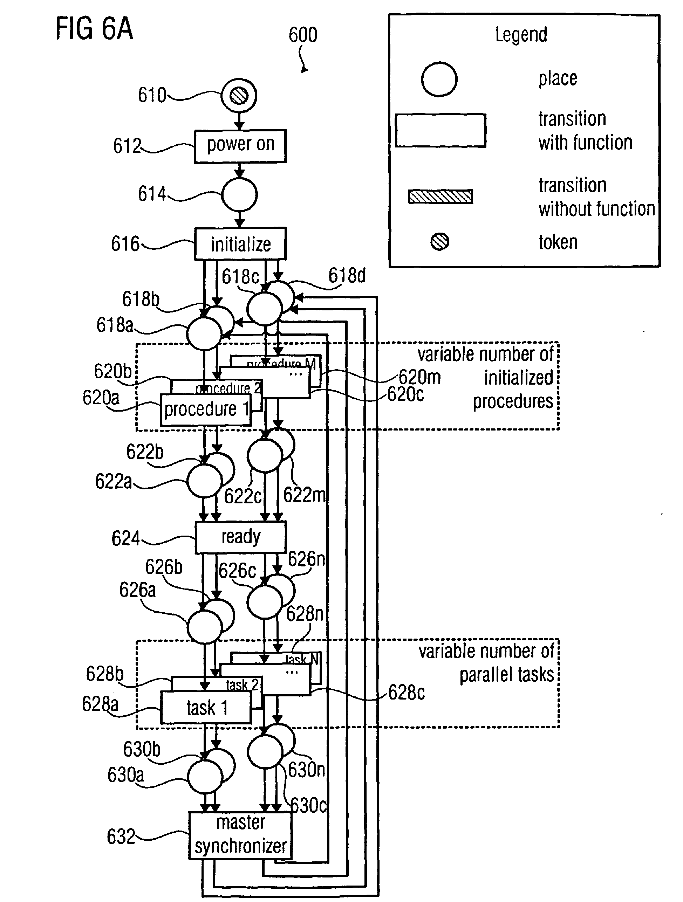

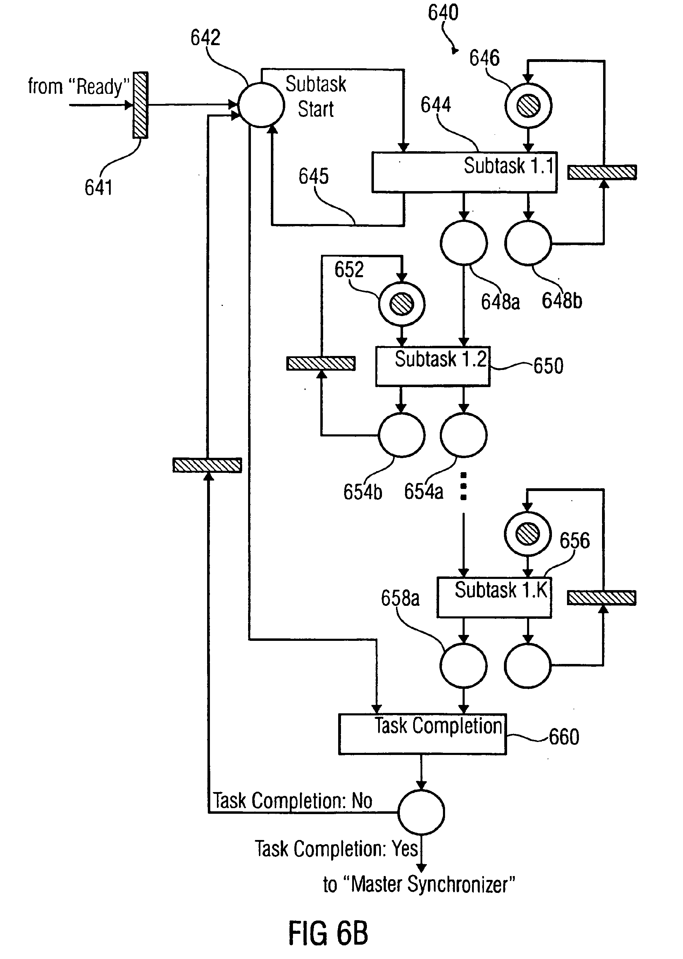

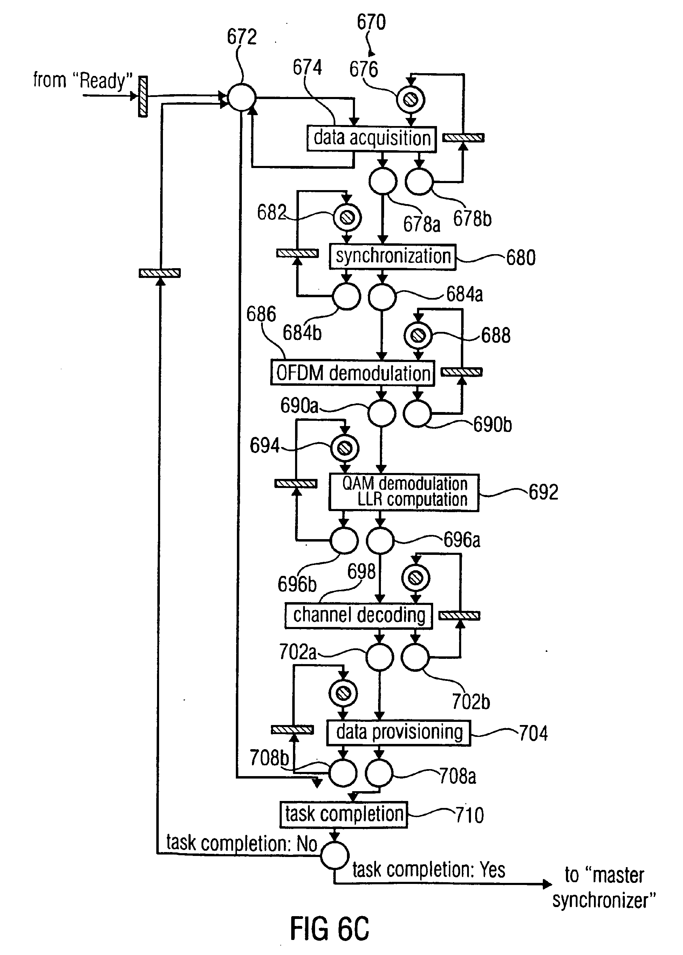

The scheduling program which runs on the instruction-based digital signal processor will be described in more detail taking reference to Figs. 6a, 6b, and 6c.

### General Remarks regarding Petri Nets

Regarding the Petri net representations of Figs. 6a, 6b, and 6c, the following general remarks should be made.

Petri nets are selected for illustrating all processes. The same consist of mark places (gray circles), marks (black dots), transitions (gray or black rectangles) and edges (black arrows, also designated sometimes as "directed arcs"). Mark places can only be directly connected to transitions, transitions only to mark places. In this respect, the illustration as Petri net is a bipartite graph.

The places from which an edge (or arc) runs to a transition are called the input places of the transition. The places to which edges (or arcs) run from a transition are called the output places of the transition.

Transitions describe processes that can be executed when all mark places on the input side are occupied and all mark places of the transition on the output side are available.

Places may contain a non-negative number of tokens. A distribution of tokens over the places of a net is called a marking. A transition of a Petri net may "fire" whenever there is a token at the end of all input arcs. When it fires, it consumes these tokens, and places tokens at the end of all output arcs. A firing is considered "atomic", i.e. a single non-interruptible step.

Execution of Petri nets is non-deterministic: when multiple transitions are enabled at the same time, any of them may fire. If a transition is enabled, it may fire but is does not have to.

Since firing is non-deterministic, and multiple tokens may be present anywhere in the net (even in the same place), Petri nets are well-suited for modeling the concurrent behavior of distributed systems.

### General Implementation of a multi-tasking Scheduling Program

Fig. 6a shows a Petri net of a general implementation of a multi-tasking scheduling program according to an embodiment of the invention.

Regarding the Petri net shown in Fig. 6a, said Petri net describes the basics of the multi-tasking scheduling, which may be executed by the Digital Signal Processor mentioned above. In other words, the digital signal processor may be configured to execute the scheduling algorithm of Fig. 6a, or a similar scheduling algorithm. However, embodiments of the present invention are not restricted to the specific scheduling algorithm described here.

The algorithm described by the Petri net starts at a starting place 610. In response to the power-on of the system (or of the digital signal processor) shown at reference numeral 612, an input place 614 of the "Initialized" transition (or initialize process) 616 is activated. Accordingly, the initialization 616 is performed. The initialization 616 determines the number of initialization procedures (also briefly designated as "procedures"), to be started. The procedures (or the number of procedures) are dependent on how many tasks have to be executed (or run) afterwards, and also from the construction of the hardware, in particular from the type and number of the hardware and software components (e.g. clock distribution, analog-to-digital converter and digital-to-analog converter, active analog components such as mixers and amplifiers, interfaces, FPGAs including their programming, for example, with a flexible LDPC- or turbo codec, digital signal processors including firmware and software, and so on).

If this pre-initialization 616 is completed, places 618a-618b are filled with tokens such that the procedures 620a-620d (also designated as "procedure 1" to "procedure M", or generally with "procedure n") can be executed, for example in a time-sharing manner. As mentioned above, the pre-initialization 616 determines how many of the initialization procedures 620a-620m should be executed, such that a variable number of initialization procedures are run. For example, a procedure "n" fulfills the initialization of the hardware and software component which is required for a correct processing of the task. The procedures are concurrent and independent from each other.

Upon completion of an individual one of the procedures 620a-620m, corresponding places 622a-622m are provided with a token. The places 622a-622m are input tokens to a "wait-for-completion" transition (also designated with "ready") 624. The "ready" transition (or "ready" process) validates the initialization of the hardware and the software components. Thus, places 626a-626n are filled with tokens in response to a completion of all of the initialization procedures 620a-620m. Thus, tasks 628a-628n (also designated with "task 1" to "task N", or generally with "task n") are executed, for example, in a concurrent and time-sharing manner. The number of tasks 628a-628n is variable, and may for example be determined by the scheduler.

A given task designated with "task n" carries out the transmitter-sided and/or the receiver-sided real time signal processing in a predetermined mode of operation of a wireless or wired communication system to be realized. For example, "task 1" may realize a DVB-T2 receiver for the DVB-T2-variant having 32k FFT and 256-QAM. "Task 2" may for example be a GSM-modem and so on. The tasks 628a-628n are concurrent and independent from each other.

Upon completion of a given one of the tasks 628a-628n, a token is placed in a place 630a-630n associated with the given task 628a-628n. The places 630a-630n are input places of a master synchronizer process 632. The master synchronizer 632 determines that all tasks have been carried out (or completed) and starts the next iteration of the initialization (by generating tokens in places 618a-618d), which in turn allows for the execution of the initialization procedures 620a-620m.

A re-initialization may for example be useful if a transmission format is changed. For example, when receiving a DVB-T transmission, different channels (or TV programs) may be encoded with different parameters, and possibly a different encoding quality). Thus, a decoding task 628a may be terminated in response to a change of the channel, for example from a channel transmitted using a first encoding format to a channel transmitted using a second encoding format. Accordingly, the initialization, e.g. using the initialization procedure 620a, may be executed between the decoding of the previous channel and the decoding of the subsequent channel.

In the following, it will briefly be described how a single task of tasks 628a-628n can be split up into a plurality of sub-tasks and how the sub-tasks can be coordinated.

For this purpose, Fig. 6b shows a Petri net representation 640 of a task, e.g. one of tasks 628a-628n. For example, a token may be generated in a place 642, also designated with "sub-task start", in response to the generation of the token in one of the places 626a-626n, for example via a transition 641. The presence of a token in the place 642 may allow for an execution of a sub-task 644, also designated as "sub-task 1.1", provided that a token is available in the place 646. The usage of the place 646 allows for a sequentialization. The additional switching condition has the result that a single transition cannot be executed several times simultaneously.

When the sub-task 644 has generated sufficient output data for a further processing, or when sub-task 644 is completed, the sub-task 644 generates output tokens in places 648a, 648b. The token generated in the output place 648b transitions to the input place 646, thereby allowing a re-start of the sub-task 644. Further, the presence of a token in place 648a which is an input place to a second sub-task 650 (also designated as "sub-task 1.2") allows for a new execution of the sub-task 650, provided that a token is also present in the input place 652 of the sub-task 650. Upon completion, or if sufficient output data are available, sub-task 650 creates tokens in its associated output places 654a, 654b, thereby allowing the execution of a further dependent sub-task, and also a re-start or re-execution of the sub-task 650. Accordingly, it can be ensured that dependent sub-tasks (wherein a subsequent, dependent sub-task requires information or data from a previous sub-task) are started sequentially, such that the data dependency is obeyed. However, the concept described herein also allows the parallel execution of multiple sub-tasks. For example, once the first sub-task 644 is completed, the first sub-task 644 may be restarted, e.g. with new input data, while the second sub-task 650 is running. This is due to the fact that there is an immediate feedback 645 from the first sub-task to one of its input places. Accordingly, the first sub-task 644 may be restarted immediately, once it is completed, independent from a completion of other, dependent sub-tasks 650, 656.

Moreover, the execution of the task comprises a task completion mechanism (or task completion process) 660. If the last sub-task 656 (within a data processing chain) is completed, and creates a token in its output place 658a, the task completion process 660 is executed removing the token from the sub-task start place 642. The task completion task 660 checks whether the task is completed. If this is the case, the task completion process 660 hands a token over to an input place of the master synchronizer 632, e.g. to the place 630a. If the task is not completed, however, the task completion process 660 generates a token in the sub-task start place 642 thereby allowing a re-execution of the first sub-task 644, without handing a token over to the input place 630a of the master synchronizer.

In other words, the "task completion" process 660, decides after each iteration of sub-task 1, whether the task is carried out (or completed). If this is the case, the start token is removed (from the sub-task start place 642), and the sequence of events is thereby interrupted.

To summarize the above, the so-called "sub-task 1.n" realizes a functionality of the transmitter and/or of the receiver, e.g. the data acquisition from the analog-to-digital converter, the demodulation, the generation of a reliability information, the channel decoding and the forwarding of decoded data to further units of the terminal (display elements such as LCD displays, LEDs, etc.). The sub-tasks (1.1, 1.2, ..., 1. k) are concurrent, but start one after another in the order of the ascending numbering.

In the following, details regarding the scheduling will be described for the example of a DVB-T reception. For this purpose, Fig. 6c shows a Petri net representation 670 of a scheduling in a DVB-T receiver. The scheduling algorithm shown in Fig. 6c comprises a place 672 to which a token is passed from the "ready" process 624 shown in Fig. 6a. For example, the successful completion of the "ready" process signals to the DVB-T2 receiver that all components are initialized successfully and that the processing of data can start. In response to a generation of a token in the starting place 672, a data acquisition process 674 can be started, provided that the data acquisition process is not presently being executed. The fact that the data acquisition process 674 is ready to be executed is indicated by the presence of a token in the input place 676 of the data acquisition process 674. As soon as the data acquisition 674 is started, it absorbs the token in the starting place 672 and also the token in the input place 676. As soon as the data acquisition process 674 is completed, it generates tokens in its output places 678a, 678b, thereby allowing a start of the synchronization process 680 and also a restart of the data acquisition process 674 itself (by transition of the token from the output place 678b to the input place 676).

A synchronization process 680 can be executed as soon as tokens are present in its input places 678a and 682. Thus, the completion of the data acquisition process 674, which brings along the generation of a token in the input place 678a, is a prerequisite for the execution of the synchronization process 680. Upon completion of the synchronization process 680, tokens are generated in its output places 684a, 684b, which allows for an execution of an OFDM demodulation task 686, and also for a re-execution of the synchronization process 680. The execution of the OFDM demodulation process 686 also requires the presence of a token in its input place 688, which is obtained in response to the completion of the previous execution of the OFDM demodulation process 686. If the OFDM demodulation task 686 is completed, tokens are generated in its output places 690a, 690b. The presence of a token in the output place 690a allows the execution of a quadrature amplitude modulation demodulation and log-likelihood-ratio computation process 692, and the presence of a token in the place 690b allows for a re-execution of the OFDM demodulation process 686 (because the token transitions from place 690b to place 688).

Again, the execution of the process 692 requires the presence of a token in the input place 694, and a completion of the process 692 results in a generation of tokens in places 696a, 696b, thereby allowing an execution of a channel decoding process 698 and a re-execution of the quadrature amplitude modulation demodulation and log-likelihood-ratio computation process 692. The execution of the channel decoding process 698 results in the generation of tokens in its output places 702a, 702b, thereby allowing an execution of a data provisioning process 704 and also a re-execution of the channel decoding process 698 itself. A completion of the data provisioning process 704 results in a generation of tokens in its output places 708a, 708b, thereby allowing the execution of a task completion process 710 and also a re-execution of the data provisioning process 704 itself. At final completion process 710 checks whether the task is completed and renews the token in the starting place 672 if the task is not yet completed. Otherwise, the task completion process 710 hands over a token to the "master synchronizer" process.

In the following, the functionality of the different processes 674, 680, 686, 692, 698, 704, 710 will be briefly summarized.

The data acquisition 674 comprises a block-wise transfer of the data received on an external module and digitized there, from a buffer located in the FPGA to the digital signal processor. Details regarding this transfer have, for example, been described making reference to Fig 3. For data acquisition, a standard interface (for example, the external memory interface of the digital signal processor) is used. The data are not synchronized at this instant in time.

Naturally, the execution of the data acquisition process 674 may be dependent on the presence of an appropriate block of data in the buffer of the FPGA, which dependency is not shown in the Petri net representation 670 of Fig 6c.

The synchronization process 680 takes care that the beginning of a frame is identified. Data, which have been received temporally before the identified beginning of the frame (DVB-T2-preamble) are discarded here.

The OFDM demodulation task 686 demodulates the DVB-T2-OFDM signal, which may comprise, for example, 32.768 subcarriers.

The QAM demodulation and LLR computation process 692 generates the soft bits required for the channel decoding in the form of log-likelihood-ratios (LLRs) from the higher order QAM-constellation, e.g. 256-QAM. The data obtained this way are transferred via a standard interface, for example PCI, from the digital signal processor to a hardware accelerator, which will be arranged, for example, in another FPGA (or which may comprise another FPGA).

The channel decoding process 698 may, for example, execute a channel decoding of the data stream, which may, for example, be LDPC-encoded. As the data input is performed asynchronously, for example, via PCI, data are firstly buffered over a complete block length of the used code, before they can be processed.

The data provisioning process 704 is responsible for the packet-wise transfer of decoded DVB-T2 TS (transport stream) data, for example to a connected personal computer, which takes over the source decoding. The transmission is again performed via a standard interface, for example, USB.

The task completion task 710 checks, whether the current task block must be (or may be) reconfigured. For DVB-T2, this is the case when the user switches the channel.

To summarize the above, the flow chart, in the form of a Petri net representation, of Fig 6c describes the functionality of a dedicated DVB-T2 task comprising a plurality of subtasks.

Also, generally speaking the flow charts, in the form of Petri nets, shown in Figs 6a, 6b, and 6c described, in detail, the scheduling which is used in some embodiments according to the invention.

### Scheduling Summary

To summarize, Fig. 6a shows an overview of the structure of the scheduler. The start state (top, 610) is pre-occupied with a mark as soon as the transceiver is turned on. At that moment, the transition can switch "Power On" (612) and the device can be placed into its initial state (614). Subsequently, the transition "Initialize" (616) is ready to switch. This transition determines the number of initialization procedures to be started. On the one hand, the procedures depend on how many tasks will have to be carried out later and, on the other hand, on the structure of the hardware, in particular the type and number of hardware and software components (e.g. clock distribution, A/D and D/A converter, active analog components such as mixer and amplifiers, interfaces, FPGAs including programming of the same, for example; a flexible LDPC or turbo codec, DSPs including firmware and software, etc.).

Then, a variable number M of procedures (620a - 620m) is ready to switch. Every individual "procedure n" carries out the initialization of the hardware and software components required for the correct processing of the tasks. The procedures are parallel and independent of each other. When all procedures are executed, the transition "ready" (624) is ready to switch. This transition validates the previously performed initialization.

Then, a variable number N of tasks (628a - 628n) is ready to switch. "Task n" carries out the transmitter and/or receiver side real time signal processing in a certain mode of operation of a wireless or wire communication system to be realized. For example, "Task 1" (628a) realizes a DVB-T2 receiver for the DVB-T2 variation with 32k FFT and 256-QAM, "Task 2" (628b) is a GSM modem, etc. The tasks (628a - 628n) are parallel and independent of each other. A detailed view of a task (628a - 628n) is illustrated in Fig. 6b, and a specific example for a task (628a - 628n) in Fig. 6c.

Then, when all tasks are completed (see herefore in particular "Task Completion" (660, 710) Fig. 6b or Fig. 6c, respectively) the "Master Synchronizer" (632) is ready to switch. Then, this transition (632) determines whether the configuration of the system is still valid and ensures that the system is reconfigured if necessary. If required, this can include an alteration of the number M of initialization procedures (620a - 620m) or an alteration of the number N of tasks.

Fig. 6b shows a detailed view of a task. Fig. 6b shows the sequence of all the N tasks (628a - 628n) running in parallel (or at least an execution of one of the tasks 628a-628n).

Every task is divided into a variable number K of subtasks. Since the mark place (626a - 626n) at the beginning of the task has been occupied by the external scheduler (c.f. Fig. 6a, e.g. by the "ready" task 624), then, automatically, the mark place "Subtask Start" (642, 672) is occupied. Thus, subtask 1.1 (644, 674) is ready to switch, since the second input mark place (646, 676) of subtask 1.1 (as well as all other subtasks) has already been preoccupied by the respective initialization procedure (c.f. Fig. 6a). After the subtask 1.1 (644, 674) has been executed, the mark place "Subtask Start" (642, 672) is immediately occupied again, so that the transition subtask 1.1 (644, 674) is again ready to switch as soon as the start mark has been removed (e.g. from place 648a, 678a) by switching the transition 1.2 (650, 680). The additional fed-back edges at every subtask serve for sequentialization. The same illustrate that every individual subtask (e.g. 644, 650, 656, 674, 680, 686, 692, 698, 704) is a sequential process, since the same ensures that every subtask can only run once simultaneously.

All in all K subtasks (644, 650, 656; 674, 680, 686 692, 698, 704) running parallel exist in this manner. If the last subtask is completed and the mark place "Subtask Start" (642, 672) is simultaneously occupied, the transition "Task Completion" (660, 710) is executed, since the same has a higher priority than subtask 1.1 (644, 674). During this transition (660, 710), a decision is made whether the task has to be reconfigured or whether the current configuration can be maintained. If the first is the case, the mark leaves the task (e.g. 628a - 628n) and is supplied to the "Master Synchronizer" (632). The already activated subtasks will then be completed. Otherwise, the mark is immediately available again on the mark place "Subtask Start" (642, 672) and all subtasks keep running uninterruptedly.

Fig. 6c shows a detailed view of a task using the example of a DVB-T2-Receiver. Fig. 6c shows a specific illustration of a task using the example of a DVB-T2 receiver. This structure is identical to the general structure illustrated on Fig. 6b. The tasks executed in parallel are listed below.
- "Data Acquisition" designates the block-by-block transmission of the data, received on an external module and digitalized there, from the buffer in the FPGA to the DSP. A standard interface is used for this. At this time, the data are not synchronized.
- "Synchronization" ensures that the frame start is detected. Data received prior to the detected frame start (DVB-T2 preamble) are discarded.
- "OFDM Demodulation" demodulates the DVB-T2-OFDM signal comprising, e.g. 32,768 sub carriers.
- "QAM Demodulation/LLR Computation" generates the soft bits required for channel decoding in the form of log-likelihood-ratios (LLRs) from the high-order QAM constellation, e.g. 256-QAM. The data gained in that way are transmitted by the DSP, which can reside, for example, in a further FPGA, to a hardware accelerator via a standard interface, e.g. PCI.
- "Channel Decoding" executes channel decoding of the data stream, which is, for example LDPC encoded. Since the data input is performed asynchronously via, e.g. PCI, the data are buffered first across a full block length of the used code, before the same can be processed.
- "Data Provisioning" is responsible for packet-switched transmission of decoded DVB-T2-TS (Transport Stream) data to, e.g., a connected PC, which performs source decoding. Again, the transmission is performed via a standard interface, e.g. USB.
- "Task Completion" checks whether the current task block has to be/can be reconfigured. In DVB-T2, this is, e.g., the case when the user switches the channel.

### Conclusion

The above description of an embodiment of the invention shows some key aspects of the present invention. One important aspect of the invention is the fact that data are exchanged between the individual components of the demonstrator in an asynchronous way.

Another aspect of the invention is in the fact that standard interfaces, like, for example, PCI or Ethernet, are used for this exchange of data. For example, when using an Ethernet interface, a packet-oriented communication between the individual components of the demonstrator architecture takes place.

Another aspect of the invention is the distribution of tasks to the digital signal processor as a coordinator and the FPGA's hardware accelerators, which is specific for the case of DVB-T2 but nevertheless flexible.

Another aspect of the inventive concept is the concurrency, with which the different tasks are dealt with (no strictly procedural processing).

Another aspect of the inventive concept is the modularity, which allows to operate different communication systems on the demonstrator architecture, also in parallel.

These properties distinguish the present demonstrator architecture from other, conventional architectures.

### Embodiment according to Fig 7

In the following, an alternative implementation concept will be briefly discussed making reference to Fig 7.

Fig 7 shows a block schematic diagram of a digital receiver architecture, according to an embodiment of the invention. The digital receiver architecture of Fig 7 is designated in its entirety with 800. The A digital receiver architecture comprises a receiver front end 810. The receiver front end comprises, as a central element, an FPGA 820, for example of type XILINX XC3S400. The receiver front end comprises an analog-to-digital converter 830, which is coupled with the FPGA 820. The receiver front end also comprises a radio frequency front end 840, which is configured to receive radio frequency signals, for example in the VHF band and/or the UHF band. Alternatively or additionally, the radio frequency front end 840 may be configured to receive a radio frequency signal of the WLAN system (for example in a frequency arranged around 2.4 Gigahertz) and/or the WiMax system (for example in a frequency range around 2.5 Gigahertz or around 3.5 Gigahertz). The radio frequency front end 840 may for example be connected with an input of the analog-to-digital converter 830 via a connecter 850, such that the analog-to-digital converter 830 is made to receive an intermediate frequency signal provided by the radio frequency front end 840. Optionally, the radio frequency front end may additionally comprise a transmitter circuit and may be configured to receive an analog base band signal or intermediate frequency signal from the optional digital-to-analog converter 832 via an optional connector 834. The base band signal or intermediate frequency signal optionally provided to the radio frequency front end 840 is generated by the optional digital-to-analog converter 832 on the basis of digital data provided by the field programmable gate array 820. Further, the radio frequency front end 840 may receive additional control information from the FPGA 820, for example, in order to adjust a filter or a variable gain amplifier.

The FPGA 820 is further coupled to connectors 860, 862, which provide an interface between the FPGA 820 and the central digital signal processor described in detail above. For example, the FPGA is coupled with the DSP via two interfaces 860, 862. For example, the FPGA 820 may be coupled with the digital signal processor via an external memory interface 860 and also via an external peripheral interface 862.

As usual, the FPGA 820 may be coupled to a crystal clock oscillator providing a clock for synchronous logic of the FPGA 820, and also to a debug interface and a JTAG interface. Further, the FPGA 820 may be coupled to a DSP module.

It should be noted here that the receiver 800 typically also comprises the DSP module, which has been described above, but which is not shown in Fig. 7 for the sake of simplicity.

In addition, the receiver 800 typically also comprises a hardware accelerator, which may, for example, comprise a high density FPGA, like, for example, a XILINX VIRTEX IV or VIRTEX V FPGA 870. The coupling between the receiver front end 810 and the hardware accelerator 870 may be established directly or via the digital signal processor module (not shown in Fig. 7), as discussed in detail above (for example with reference to Fig.7).

To summarize the above, Fig. 7 shows the implementation concept of a digital receiver and/or digital transmitter, according to an embodiment of the invention, putting focus on the structure of the receiver (or transmitter, or transceiver) front end 810. However, the explanations which have been made with reference to the system shown in Fig. 2 also hold for the system of Fig. 7.

### Different implementation technologies

Depending on certain implementation requirements, embodiments of the invention can be implemented partly or completely in hardware or in software. The implementation can be performed using a digital storage medium, for example a floppy disk, a DVD, a CD, a ROM, a PROM, an EPROM, an EEPROM or a FLASH memory, having electronically readable control Signals stored thereon, which cooperate (or are capable of cooperating) with a programmable computer System such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium) comprising the computer program for performing one of the methods described herein.

A further embodiment of the inventive method is, therefore, a data stream or a sequence of signals representing the computer program for performing on of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein.

### References

[1] Alamouti, S. M.: A Simple Transmit Diversity Technique for Wireless Communications. IEEE Journal on Selected Areas in Communications, vol. 16 (1998), pp. 1451 - 1458.
[2] Gesbert, D.; Shafi, M.; Shiu, D.; Smith, P.; Naguib, A.: From Theory to Practice: An Overview of MIMO Space-Time Coded Wireless Systems. IEEE Journal on Selected Areas in Communications, vol. 21 (2003), pp. 281 - 302.
[3] Zhu, H.; Shi, Z.; Farhang-Beroujeny, B.; Schlegel, C.: An efficient statistical approach for calculation of MIMO channels. IASTED International Conference on Wireless and Optical Communications (WOC 2003), Banff/Canada, 14-16-July 2003.
[4] Tarokh, V.; Jafarkhani, H.; Calderbank, A. R.: Space-Time Block Codes from Orthogonal Designs. IEEE Transactions on Information Theory, vol. 45 (1999), pp. 1456 - 1467.
[5] Al-Dhahir, N.: Single-Carrier Frequency-Domain Equalization for Space-Time Block-Coded Transmission over Frequency-Selective Fading Channels. IEEE Communications Letters, vol. 5 (2001), pp. 304 - 306.
[6] V. Zelst, A.: MIMO OFDM for Wireless LANs. Ph.D. Disseration, Department of Electrical Engineering, Eindhoven University of Technology, April 2004.
[7] Jung, P.; Bruck, G.: Evolution Concept of Terrestrial Digital Video Broadcasting (DVB-T2) . Company Confidential.
[8] ETSI: Digital Video Broadcasting (DVB); Frame structure channel coding and modulation for a second generation digital terrestrial television broadcasting system (DVB-T2). ETSI EN 302 755 V1.1.1 (2008-04).
[9] ETSI: Digital Video Broadcasting (DVB) ; Framing structure, channel coding and modulation for digital terrestrial television. ETSI EN 300 744 V1.5.1 (2004-11).
[10] ETSI: Digital Video Broadcasting (DVB); Implementation Guidelines for DVB-T2 services. Version 0.4.0. Document ID: T2_0447.
[11] Jondral, F.K.: "Software-defined radio - basics and evolution to cognitive radio. EURASIP Journal on Wireless Communications and Networking, vol. 3 (2005), pp. 275-283.

## Claims

1. A digital receiver (100; 200; 300; 800), comprising:
a receiver front end (110; 230; 810) configured to provide digitized receive data;
an instruction-based digital signal processor (120; 210) configured to execute a program;
a hardware accelerator (130; 220; 870) comprising a field-programmable gate array; and
a data sink interface (140; 225);
wherein the digital signal processor is configured to coordinate, using a multi-tasking scheduling program (600), an acquisition (674) of data from the receiver front end to the digital signal processor, a processing (680, 686, 692) of the acquired data by the digital signal processor and an exchange (692) of data between the digital signal processor and the hardware accelerator;
wherein the receiver front end (110;230;810) comprises a field-programmable gate array (232;460;820), wherein the field-programmable gate array is configured to control an analog-to-digital converter (236;494;830) for digitizing analog receive data and wherein the field-programmable gate array further comprises a FIFO-buffer (232a) to FIFO-buffer digitized data provided by the analog-to-digital converter;
wherein the FPGA of the receiver front end is coupled to a memory interface (EMIF) of the digital signal processor and is configured to allow for a readout of the FIFO-buffered digitized data under the control of the memory interface (EMIF) of the digital signal processor.

2. The digital receiver (100;200;300;800) according to claim 1, wherein the multi-tasking scheduling program (600) is configured to control an asynchronous data exchange (674) between the receiver front end (110;230;810) and memory (212) associated with the digital signal processor (120;210), or an asynchronous data exchange (692) between the hardware accelerator (130;220;870) and the digital signal processor (120;210).

3. The digital receiver (100;200;300;800) according to claim 1 or 2, wherein the FIFO-buffer (232a) is configured to receive FIFO input data from the analog-to-digital converter (236) at an input data rate in synchronism with an analog-to-digital conversion rate of the analog-to-digital converter (236), and to provide FIFO-output-data to the memory interface (EMIF) of the digital signal processor (210) at an output data rate higher than the input data rate; and
wherein the multi-tasking scheduling program (600) is configured to initiate a block transfer (674) of data from the field-programmable gate array (232) of the receiver front end (230) to the memory (212) associated with the digital signal processor in temporal coordination with other processing tasks (680,686,692) of the digital signal processor.

4. The digital receiver (100; 200; 300; 800) according to one of claims 1 to 3, wherein the digital signal processor (210) is configured to control the transfer of the digitized data from the FPGA (232) of the receiver front end (230) to the memory (212) associated with the digital signal processor in accordance with memory access instructions of the multi-tasking scheduling program (600), or
wherein the digital receiver comprises a direct-memory-access controller configured to control the transfer of the digitized data from the FPGA (232) of the receiver front end (230) to the memory (212) associated with the digital signal processor in accordance with direct-memory-access configuration instructions of the multi-tasking scheduling program (600).

5. The digital receiver (100; 200; 300; 800) according to once of claims 1 to 4, wherein the FPGA (232) of the receiver front end (230) comprises a register (232b) for a front end configuration information, wherein the register (232b) for the front end configuration information is writable via the memory interface (EMIF) of the digital signal processor, and
wherein the multi-tasking scheduling program (600) is configured to write (620a) configuration information to the register (232b) for the front end configuration in an initialization phase.

6. The digital receiver (100; 200; 300; 800) according to one of claims 1 to 5, wherein the digital receiver is configured to predominantly execute decision-based data processing algorithms (680,686) having a data-dependent execution time using the instruction-based digital signal processor (120;210), and
to predominantly execute algorithms (698) having a data-independent execution time using the hardware accelerator (130;220;870).

7. The digital receiver (100;200;300;800) according to one of claims 1 to 6, wherein the instruction-based digital signal processor (120;210) is configured, using a program code stored in an internal or external memory, to perform a scheduling (600) of different tasks (620a-620m,628a-628n;674,680,686,692,698,704), an execution of a data processing task (680,686,692) and an execution of a data transfer task (674,692) in a time-sharing manner using a single processor core;
wherein the signal processor is further configured to decide about the initiation of a given data processing task (680,686,692) in dependence on the availability of a complete set of input data for the given data processing task (680,688,692) and in dependence on the availability of a buffer memory portion for the output data of the given data processing task (680,686,692).

8. The digital receiver (100; 200; 300; 800) according to one of claims 1 to 7, wherein the digital signal processor is configured, using a program code, to perform an initialization of the receiver front end and/or of the hardware accelerator.

9. The digital receiver (100; 200; 300; 800) according to one of claims 1 to 8, wherein the receiver front end is configured to receive a digital video broadcast signal and to digitize and downconvert the digital video broadcast signal, to obtain a digitized and downconverted receive signal;
wherein the digital signal processor is configured to obtain a synchronization of the digitized and downconverted receive signal,
to process a signalling information comprised by the digitized and downconverted receive signal,
to demodulate the digitized and downconverted receive signal, to obtain log-likelihood-ratios; and
wherein the hardware accelerator is configured to perform a channel decoding of the received data.

10. The digital receiver (100;200;300;800) according to one of claims 1 to 9, wherein the digital signal processor is configured to execute a second data processing task, which is independent with respect to the processed data from a processing of the digitized receive data, in addition to the processing of the digitized receive data.

11. A method for operating a digital receiver comprising a receiver front end configured to provide digitized receive data, an instruction-based digital signal processor configured to execute a program, a hardware accelerator comprising a field-programmable gate array, and a data sink interface, wherein the receiver front end comprises a field-programmable gate array and an analog-to-digital converter, and wherein the field programmable gate array of the receiver front end is coupled to a memory interface (EMIF) of the digital signal processor, the method comprising:
coordinating, using a multi-tasking scheduling program, an acquisition of data from the receiver front end to the digital signal processor, a processing of the acquired data by the digital signal processor and an exchange of data between the digital signal processor and the hardware accelerator;
wherein the field-programmable gate array controls the analog-to-digital converter for digitizing analog receive data, and
wherein the field-programmable gate array FIFO-buffers digitized data provided by the analog-to-digital converter; and
wherein the field programmable gate array of the receiver front end allows for a readout of the FIFO-buffered digitized data under the control of the memory interface (EMIF) of the digital signal processor.

12. A computer program for executing the method according to claim 11, when the computer program runs on a computer.

## Patentansprüche

1. Ein digitaler Empfänger (100; 200; 300; 800), der folgende Merkmale aufweist:
ein Empfänger-Front-End (110; 230; 810), konfiguriert, um digitalisierte Empfangsdaten zu liefern;
einen anweisungsbasierten digitalen Signalprozessor (120; 210), der konfiguriert ist, um ein Programm auszuführen;
eine Hardware-Beschleunigungseinrichtung (130; 220; 870), die ein feldprogrammierbares Gatearray aufweist; und
eine Datensenkenschnittstelle (140; 225);
wobei der digitale Signalprozessor konfiguriert ist, um unter Verwendung eines Multitasking-Planungsprogramm (600) einen Erwerb (674) von Daten von dem Empfänger-Front-End zu dem digitalen Signalprozessor, eine Verarbeitung (680, 686, 692) der erworbenen Daten durch den digitalen Signalprozessor und einen Austausch (692) von Daten zwischen dem digitalen Signalprozessor und der Hardware-Beschleunigungseinrichtung zu koordinieren;
wobei das Empfänger-Front-End (110; 230; 810) ein feldprogrammierbares Gatearray (232; 460; 820) aufweist, wobei das feldprogrammierbare Gatearray konfiguriert ist, um einen Analog-zu-Digital-Wandler (236; 494; 830) zum Digitalisieren analoger Empfangsdaten zu steuern und wobei das feldprogrammierbare Gatearray einen FIFO-Puffer (232a) aufweist zum FIFO-Puffern digitalisierter Daten, die durch den Analog-zu-Digital-Wandler geliefert werden;
wobei das FPGA des Empfänger-Front-Erids mit einer Speicherschnittstelle (EMIF) des digitalen Signalprozessors gekoppelt ist und konfiguriert ist, um ein Auslesen der FIFO-gepufferten digitalisierten Daten unter der Steuerung der Speicherschnittstelle (EMIF) des digitalen Signalprozessors zu erlauben.

2. Der digitale Empfänger (100; 200; 300; 800) gemäß Anspruch 1, bei dem das Multi-tasking-Planungsprogramm (600) konfiguriert ist, um einen asynchronen Datenaustausch (674) zwischen dem Empfänger-Front-End (110; 230; 810) und dem Speicher (212) zu steuern, der dem digitalen Signalprozessor (120; 210) zugeordnet ist, oder einen asynchronen Datenaustausch (692) zwischen der Hardware-Beschleunigungseinrichtung (130; 220; 870) und dem digitalen Signalprozessor (120; 210).

3. Der digitale Empfänger (100; 200; 300; 800) gemäß Anspruch 1 oder 2, bei dem der FIFO-Puffer (232a) konfiguriert ist, um FIFO-Eingangsdaten von dem Analog-zu-Digital-Wandler (236) bei einer Eingangsdatenrate synchron zu einer Analog-zu-Digital-Umwandlungsrate des Analog-zu-Digital-Wandlers (236) zu empfangen, und FIFO-Ausgangsdaten zu der Speicherschnittstelle (EMIF) des digitalen Signalprozessors (210) bei einer Ausgangsdatenrate zu liefern, die höher ist als die Eingangsdatenrate; und
bei dem das Multitasking-Planungsprogramm (600) konfiguriert ist, um eine Block-übertragung (674) von Daten von dem feldprogrammierbaren Gatearray (232) des Empfänger-Front-Ends (230) zu dem Speicher (212) zu initiieren, der dem digitalen Signalprozessor zugeordnet ist, in zeitlicher Koordination mit anderen Verarbeitungsaufgaben (680, 686, 692) des digitalen Signalprozessors.

4. Der digitale Empfänger (100; 200; 300; 800) gemäß einem der Ansprüche 1 bis 3, bei dem der digitale Signalprozessor (210) konfiguriert ist, um die Übertragung der digitalisierten Daten von dem FPGA (232) des Empfänger-Front-Ends (230) zu dem Speicher (212) zu steuern, der dem digitalen Signalprozessor zugeordnet ist, gemäß Speicherzugriffsanweisungen des Multitasking-Planungsprogramms (600), oder
wobei der digitale Empfänger eine Direktspeicherzugriffssteuerung aufweist, die konfiguriert ist, um die Übertragung der digitalisierten Daten von dem FPGA (232) des Empfänger-Front-Ends (230) zu dem Speicher (212) zu steuern, der dem digitalen Signalprozessor zugeordnet ist, gemäß Direktspeicherzugriffskonfigurationsanweisungen des Multitasking-Planungsprogramms (600).

5. Der digitale Empfänger (100; 200; 300; 800) gemäß einem der Ansprüche 1 bis 4, bei dem das FPGA (232) des Empfänger-Front-Ends (230) ein Register (232b) aufweist für Front-End-Konfigurationsinformationen, wobei das Register (232b) für die Front-End-Konfigurationsinformationen über die Speicherschnittstelle (EMIF) des digitalen Signalprozessors schreibbar ist, und
wobei das Multitasking-Planungsprogramm (600) konfiguriert ist, um Konfigurationsinformationen (232b) in das Register (232b) zu schreiben (620a), für die Front-End-Konfiguration in einer Initialisierungsphase.

6. Der digitale Empfänger (100; 200; 300; 800) gemäß einem der Ansprüche 1 bis 5, wobei der digitale Empfänger konfiguriert ist, um überwiegend entscheidungsbasierte Datenverarbeitungsalgorithmen (680, 686) auszuführen, mit einer datenabhängigen Ausführungszeit, unter Verwendung des anweisungsbasierten, digitalen Signalprozessors (120; 210), und
zum überwiegenden Ausführen von Algorithmen (698) mit einer datenunabhängigen Ausführungszeit unter Verwendung der Hardware-Beschleunigungseinrichtung (130; 220; 870).

7. Der digitale Empfänger (100; 200; 300; 800) gemäß einem der Ansprüche 1 bis 6, bei dem der anweisungsbasierte, digitale Signalprozessor (120; 210) konfiguriert ist, um unter Verwendung eines Programmcodes, der in einem internen oder externen Speicher gespeichert ist, eine Planung (600) von unterschiedlichen Aufgaben (620a-620m, 628a-628n; 674, 680, 686, 692, 698, 704), eine Ausführung einer Datenverarbeitungsaufgabe (680, 686, 692) und eine Ausführung einer Datenübertragungsaufgabe (674, 692) auf Zeitteilverfahrensweise unter Verwendung eines einzelnen Prozessorkerns auszuführen;
wobei der Signalprozessor ferner konfiguriert ist, um über die Initiierung einer gegebenen Datenverarbeitungsaufgabe (680, 686, 692) abhängig von der Verfügbarkeit eines vollständigen Satzes von Eingangsdaten für die gegebene Datenverarbeitungsaufgabe (680, 688, 692) und abhängig von der Verfügbarkeit eines Pufferspeicherabschnitts für die Ausgangsdaten der gegebenen Datenverarbeitungsaufgabe (680, 686, 692) zu entscheiden.

8. Der digitale Empfänger (100; 200; 300; 800) gemäß einem der Ansprüche 1 bis 7, bei dem der digitale Signalprozessor konfiguriert ist, um unter Verwendung eines Programmcodes eine Initialisierung des Empfänger-Front-Ends und/oder der Hardware-Beschleunigungseinrichtung auszuführen.

9. Der digitale Empfänger (100; 200; 300; 800) gemäß einem der Ansprüche 1 bis 8, bei dem das Empfänger-Front-End konfiguriert ist, um ein digitales Videorundsendesignal zu empfangen und das digitale Videorundsendesignal zu digitalisieren und abwärts zu wandeln, um ein digitalisiertes und abwärts gewandeltes Empfangssignal zu erhalten;
wobei der digitale Signalprozessor konfiguriert ist, um eine Synchronisierung des digitalisierten und abwärts gewandelten Empfangssignals zu erhalten,
um Signalisierungsinformationen zu verarbeiten, die von dem digitalisierten und abwärts gewandelten Empfangssignal enthalten sind,
um das digitalisierte und abwärts gewandelte Empfangssignal zu demodulieren, um Protokoll-Wahrscheinlichkeits-Verhältnisse zu erhalten; und
wobei die Hardware-Beschleunigungseinrichtung konfiguriert ist, um eine Kanaldecodierung der empfangenen Daten auszuführen.

10. Der digitale Empfänger (100; 200; 300; 800) gemäß einem der Ansprüche 1 bis 9, bei dem der digitale Signalprozessor konfiguriert ist, um eine zweite Datenverarbeitungsaufgabe auszuführen, die im Hinblick auf die verarbeiteten Daten unabhängig von einer Verarbeitung der digitalisierten Empfangsdaten ist, zusätzlich zu der Verarbeitung der digitalen Empfangsdaten.

11. Ein Verfahren zum Betreiben eines digitalen Empfängers, der ein Empfänger-Front-End, das konfiguriert ist, um digitalisierte Empfangsdaten zu liefern, einen anweisungsbasierten, digitalen Signalprozessor, der konfiguriert ist, um ein Programm auszuführen, eine Hardware-Beschleunigungseinrichtung, die ein feldprogrammierbares Gatearray aufweist, und eine Datensenkenschnittstelle aufweist, wobei das Empfänger-Front-End ein feldprogrammierbares Gatearray und einen Analog-zu-Digital-Wandler aufweist, und wobei das feldprogrammierbare Gatearray des Empfänger-Front-Ends mit einer Speicherschnittstelle (EMIF) des digitalen Signalprozessors gekoppelt ist, wobei das Verfahren folgende Schritte aufweist:
Koordinieren, unter Verwendung eines Multitasking-Planungsprogramms, eines Erwerbs von Daten von dem Empfänger-Front-End zu dem digitalen Signalprozessor, einer Verarbeitung der erworbenen Daten durch den digitalen Signalprozessor und eines Austauschs der Daten zwischen dem digitalen Signalprozessor und der Hardware-Beschleunigungseinrichtung;
wobei das feldprogrammierbare Gatearray den Analog-zu-Digital-Wandler zum Digitalisieren analoger Empfangsdaten steuert, und
wobei das feldprogrammierbare Gatearray digitalisierte Daten FIFO-puffert, die durch den Analog-zu-Digital-Wandler geliefert werden; und
wobei das feldprogrammierbare Gatearray des Empfänger-Front-Ends ein Auslesen der FIFO-gepufferten, digitalisierten Daten unter der Steuerung der Speicherschnittstelle (EMIF) des digitalen Signalprozessors erlaubt.

12. Ein Computerprogramm zum Ausführen des Verfahrens gemäß Anspruch 11, wenn das Computerprogramm auf einem Computer läuft.

## Revendications

1. Récepteur numérique (100; 200; 300; 800) comprenant:
un frontal de récepteur (110; 230; 810) configuré pour fournir des données de réception numérisées;
un processeur de signaux numériques à base d'instructions (120; 210) configuré pour exécuter un programme;
un accélérateur de matériel (130; 220; 870) comprenant un réseau de portes programmables; et
une interface de collecteur de données (140; 225);
dans lequel le processeur de signaux numériques est configuré pour coordonner, à l'aide d'un programme de planification multitâche (600), une acquisition (674) de données du frontal du récepteur au processeur de signaux numériques, un traitement (680, 686, 692) des données acquises par le processeur de signaux numériques et un échange (692) de données entre le processeur de signaux numériques et l'accélérateur de matériel;
dans lequel le frontal du récepteur (110; 230; 810) comprend un réseau de portes programmables (232; 460; 820), dans lequel un réseau de portes programmables est configuré pour commander un convertisseur analogique-numérique (236; 494; 830) pour numériser les données de réception analogiques et dans lequel un réseau de portes programmables comprend par ailleurs une mémoire-tampon FIFO (232a) pour tamponner FIFO les données numérisées fournies par le convertisseur analogique-numérique;
dans lequel le RPP du frontal de récepteur est couplé à l'interface de mémoire (EMIF) du processeur de signaux numériques et est configuré pour permettre une lecture des données numérisées tamponnées FIFO sous la commande de l'interface de mémoire (EMIF) du processeur de signaux numériques.

2. Récepteur numérique (100; 200; 300; 800) selon la revendication 1, dans lequel le programme de planification multitâches (600) est configuré pour commander un échange de données asynchrone (674) entre le frontal du récepteur (110; 230; 810) et la mémoire (212) associée au processeur de signaux numériques (120; 210), ou un échange de données asynchrone (692) entre l'accélérateur de matériel (130; 220; 870) et le processeur de signaux numériques (120; 210).

3. Récepteur numérique (100; 200; 300; 800) selon la revendication 1 ou 2, dans lequel la mémoire-tampon FIFO (232a) est configuré pour recevoir les données d'entrée FIFO du convertisseur analogique-numérique (236) à un débit de données d'entrée en synchronisme avec un débit de conversion analogique-numérique du convertisseur analogique-numérique (236), et à fournir les données de sortie FIFO à l'interface de mémoire (EMIF) du processeur de signaux numériques (210) à un débit de données de sortie supérieur au débit de données d'entrée; et
dans lequel le programme de planification multitâche (600) est configuré pour initier un transfert de blocs (674) de données du réseau de portes programmables (232) du frontal du récepteur (230) à la mémoire (212) associée au processeur de signaux numériques en coordination temporelle avec les autres tâches de traitement (680, 686, 692) du processeur de signaux numériques.

4. Récepteur numérique (100; 200; 300; 800) selon l'une des revendications 1 à 3, dans lequel le processeur de signaux numériques (210) est configuré pour commander le transfert des données numérisées du RPP (232) du frontal de récepteur (230) à la mémoire (212) associée au processeur de signaux numériques selon les instructions d'accès à la mémoire du programme de planification multitâche (600), ou
dans lequel le récepteur numérique comprend un contrôleur d'accès direct à la mémoire configuré pour commander le transfert des données numérisées du RPP (232) du frontal du récepteur (230) à la mémoire (212) associée au processeur de signaux numériques selon les instructions de configuration de l'accès direct à la mémoire du programme de planification multitâche (600).

5. Récepteur numérique (100; 200; 300; 800) selon l'une des revendications 1 à 4, dans lequel le RPP (232) du frontal de récepteur (230) comprend un registre (232b) pour une information de configuration du frontal, dans lequel il peut être écrit dans le registre (232b) de l'information de configuration du frontal par l'intermédiaire de l'interface de mémoire (EMIF) du processeur de signaux numériques, et
dans lequel le programme de planification multitâche (600) est configuré pour écrire (620a) une information de configuration dans le registre (232b) pour la configuration du frontal dans une phase d'initialisation.

6. Récepteur numérique (100; 200; 300; 800) selon l'une des revendications 1 à 5, dans lequel le récepteur numérique est configuré pour exécuter de manière prédominante des algorithmes de traitement à base de décisions (680, 686) ayant un temps d'exécution fonction des données à l'aide du processeur de signaux numériques à base d'instructions (120; 210), et
pour exécuter de manière prédominante des algorithmes (698) ayant un temps d'exécution indépendant des données à l'aide de l'accélérateur de matériel (130; 220; 870).

7. Récepteur numérique (100; 200; 300; 800) selon l'une des revendications 1 à 6, dans lequel le processeur de signaux numériques à base d'instructions (120; 210) est configuré, à l'aide d'un code de programme stocké dans une mémoire interne ou externe, pour réaliser une planification (600) de différentes tâches (620a à 620m, 628a à 628n, 674, 680, 686, 692, 698, 704), une exécution d'une tâche de traitement de données (680, 686, 692) et une exécution d'une tâche de transfert de données (674, 692) en temps partagé à l'aide un seul noyau de processeur;
dans lequel le processeur de signaux est par ailleurs configuré pour prendre une décision sur l'initialisation d'une tâche de traitement de données donnée (680, 686, 692) en fonction de la disponibilité d'un ensemble complet de données d'entrée pour la tâche de traitement de données donnée (680, 686, 692) et en fonction de la disponibilité d'une partie de mémoire-tampon pour les données de sortie de la tâche de traitement de données donnée (680, 686, 692).

8. Récepteur numérique (100; 200; 300; 800) selon l'une des revendications 1 à 7, dans lequel le processeur de signaux numériques est configuré, à l'aide d'un code de programme, pour réaliser une initialisation du frontal du récepteur et/ou de l'accélérateur de matériel.

9. Récepteur numérique (100; 200; 300; 800) selon l'une des revendications 1 à 8, dans lequel le frontal du récepteur est configuré pour recevoir un signal de diffusion vidéo numérique et pour numériser et convertir vers le bas le signal de diffusion vidéo numérique, pour obtenir un signal de réception numérisé et converti vers le bas;
dans lequel le processeur de signaux numériques est configuré pour obtenir une synchronisation du signal de réception numérisé et converti vers le bas;
pour traiter une information de signalisation comprise dans le signal de réception numérisé et converti vers le bas;
pour démoduler le signal de réception numérisé et converti vers le bas, pour obtenir des rapports de vraisemblance d'enregistrement; et
dans lequel l'accélérateur de matériel est configuré pour réaliser un décodage de canal des données reçues.

10. Récepteur numérique (100; 200; 300; 800) selon l'une des revendications 1 à 9, dans lequel le processeur de signaux numériques est configuré pour exécuter une deuxième tâche de traitement de données qui est indépendante par rapport aux données traitées d'un traitement des données de réception numérisées, en plus du traitement des données de réception numérisées.

11. Procédé pour faire fonctionner un récepteur numérique comprenant un frontal de récepteur configuré pour fournir des données de réception numérisées, un processeur de signaux numériques à base d'instructions configuré pour exécuter un programme, un accélérateur de matériel comprenant un réseau de portes programmables, et une interface de collecteur de données, dans lequel le frontal du récepteur comprend un réseau de portes programmables et un convertisseur analogique-numérique, et dans lequel le réseau de portes programmables du frontal du récepteur est couplé à une interface de mémoire (EMIF) du processeur de signaux numériques, ledit procédé comprenant:
coordonner, à l'aide d'un programme de planification multitâche, une acquisition de données du frontal du récepteur au processeur de signaux numériques, un traitement des données acquises par le processeur de signaux numériques et un échange de données entre le processeur de signaux numériques et l'accélérateur de matériel;
dans lequel le réseau de portes programmables commande le convertisseur analogique-numérique pour numériser les données de réception analogiques, et
dans lequel le réseau de portes programmables tamponne FIFO les données numérisées fournies par le convertisseur analogique-numérique; et
dans lequel le réseau de portes programmables du frontal du récepteur permet une lecture des données numérisées tamponnées FIFO sous la commande de l'interface de mémoire (EMIF) du processeur de signaux numériques.

12. Programme d'ordinateur pour réaliser le procédé selon la revendication 11 lorsque le programme d'ordinateur est exécuté sur un ordinateur.
